(19) Europäisches Patentamt
European Patent Office
Office européen des brevets

(11) EP 4 791 091 A1

(12) EUROPEAN PATENT APPLICATION
published in accordance with Art. 153(4) EPC

(43) Date of publication:
**12.08.2026 Bulletin 2026/33**

(21) Application number: **24889195.4**

(22) Date of filing: **08.11.2024**

(51) International Patent Classification (IPC):
***H04W 52/02*** *(2009.01)* ***H04W 24/08*** *(2009.01)*
***H04B 7/06*** *(2006.01)*

(52) Cooperative Patent Classification (CPC):
**H04B 7/06; H04W 24/08; H04W 52/02;** Y02D 30/70

(86) International application number:
**PCT/KR2024/017678**

(87) International publication number:
**WO 2025/101009 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.11.2023 KR 20230155261**

(71) Applicant: **Samsung Electronics Co., Ltd.**
**Suwon-si, Gyeonggi-do 16677 (KR)**

(72) Inventors:
- **CHOI, Seunghoon**
**Suwon-si, Gyeonggi-do 16677 (KR)**
- **RYU, Hyunsuk**
**Suwon-si, Gyeonggi-do 16677 (KR)**
- **PARK, Kyoungmin**
**Suwon-si, Gyeonggi-do 16677 (KR)**
- **YANG, Hyewon**
**Suwon-si, Gyeonggi-do 16677 (KR)**
- **LEE, Jaewon**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

# (54) METHOD AND DEVICE BY WHICH TERMINAL HAVING WAKE-UP RECEIVER PERFORMS BEAM FAILURE DETECTION IN WIRELESS COMMUNICATION SYSTEM

(57) The present disclosure relates to a 5G or 6G communication system for supporting higher data transmission rates. A method performed by a terminal in a communication system according to an embodiment of the present disclosure may comprise the steps of: receiving, through higher layer signaling, information about a timer for beam failure detection (BFD) and information about the max count of beam failure instances (BFIs); identifying that the terminal is configured in a first state related to a low-power operation; and identifying whether beam failure recovery (BFR) is triggered on the basis of the timer and the BFI maximum count.

EP 4 791 091 A1

FIG. 1

Frame (114)
Subframe (105)
Slot
(106)
$N_{BW}$ subcarriers of transmission bandwidth (104)
Resource element (112)
$N^{RB}_{sc}$ subcarriers (110)
$N^{slot}_{symb}$ symbols (102)
Frequency
Time

## Description

### [Technical Field]

The disclosure relates generally to a wireless communication system, and more particularly, to a method and device for a terminal having a wake-up receiver to perform beam failure detection in a wireless communication system.

### [Background Art]

5$^{th}$ generation (5G) mobile communication technologies define broad frequency bands such that high transmission rates and new services are possible, and can be implemented not only in "Sub 6 GHz" bands such as 3.5 GHz, but also in "Above 6 GHz" bands referred to as mmWave including 28 GHz and 39 GHz. In addition, it has been considered to implement 6$^{th}$ generation (6G) mobile communication technologies (referred to as Beyond 5G systems) in terahertz bands (e.g., 95 GHz to 3 THz bands) in order to accomplish transmission rates fifty times faster than 5G mobile communication technologies and ultra-low latencies one-tenth of 5G mobile communication technologies.

At the beginning of the 5G mobile communication technologies, in order to support services and to satisfy performance requirements in connection with enhanced Mobile BroadBand (eMBB), Ultra-Reliable Low Latency communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (e.g., operating multiple subcarrier spacings) for efficiently utilizing mmWave resources and dynamic operation of slot formats, initial access technologies for supporting multi-beam transmission and broadbands, definition and operation of BandWidth Part (BWP), new channel coding methods such as a Low Density Parity Check (LDPC) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding locations and states of vehicles transmitted by the vehicles and for enhancing user convenience, New Radio Unlicensed (NR-U) aimed at system operations conforming to various regulation-related requirements in unlicensed bands, NR UE power saving, Non-Terrestrial Network (NTN) which is UE-satellite direct communication for providing coverage in an area in which communication with terrestrial networks is unavailable, and locationing.

Moreover, there has been ongoing standardization in air interface architecture/protocol regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures (2-step RACH for NR). There also has been ongoing standardization in system architecture/service regarding a 5G baseline architecture (e.g., service based architecture or service based interface) for combining Network Functions Virtualization (NFV) and Software-Defined Networking (SDN) technologies, and Mobile Edge Computing (MEC) for receiving services based on UE locations.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-

high-performance communication and computing resources.

**[Disclosure of Invention]**

**[Technical Problem]**

The disclosure is intended to provide a device and method capable of effectively providing a service in a mobile communication system.

The technical problems to be solved by the disclosure are not limited to those mentioned above, and other technical problems not mentioned can be considered by a person skilled in the art from various embodiments of the disclosure to be described below.

**[Solution to Problem]**

A method performed by a terminal in a communication system according to an embodiment of the disclosure includes: receiving, via higher layer signaling, information on a timer for beam failure detection (BFD) and information on a maximum count for a beam failure instance (BFI); identifying that the terminal is configured to a first state associated with a low-power operation; and identifying whether to trigger a beam failure recovery (BFR) based on the timer and the maximum count for the BFI, wherein identifying whether to trigger the BFR includes performing measurement for a first reference signal corresponding to the first state.

According to an embodiment of the disclosure, identifying whether to trigger the BFR includes: identifying a BFI based on the measurement for the first reference signal; identifying a BFI counter based on the BFI; and identifying whether to trigger the BFR based on the timer, the BFI counter, and the BFI maximum count, and wherein, in identifying the BFI counter: a BFI identified based on measurement for a second reference signal corresponding to a second state associated with a normal operation different from the low-power operation, prior to identifying that the WUR is activated, is identified as being invalid, or a BFI identified based on measurement for the second reference signal via a main radio (MR) of the terminal, prior to identifying that the WUR is activated, is accumulated in the BFI counter.

According to an embodiment of the disclosure, identifying whether to trigger the BFR includes: identifying a BFI based on the measurement for the first reference signal; identifying a BFI counter based on the BFI; and identifying whether to transition to a second state associated with a normal operation different from the low-power operation based on the BFI counter, wherein, when the terminal transitions to the second state, identifying whether to trigger the BFR is performed based on measurement for a second reference signal corresponding to the second state.

According to an embodiment of the disclosure, in identifying whether the terminal is to transition to the second state: in a case where the BFI counter is greater than or equal to the maximum count for the BFI before the timer expires, the terminal is identified to transition to the second state, or in a case where the BFI counter is a predefined value, the terminal is identified to transition to the second state, wherein the predefined value is less than the BFI maximum count.

According to an embodiment of the disclosure, the method includes: receiving a timer for the first state via the higher layer signaling; when the timer for the first state expires, transitioning to a second state associated with a normal operation different from the low-power operation; and identifying whether to trigger the BFR based on measurement for a second reference signal corresponding to the second state.

According to an embodiment of the disclosure, the first state corresponds to activation of a wake-up receiver (WUR) of the terminal, a second state accodicated with a normal operation different from the low-power operation corresponds to activation of a main radio (MR) of the terminal, when the BFR is identified to be triggered, the WUR of the terminal is deactivated and the MR of the terminal is activated, and at least one of the timer or the maximum count for the BFI is configured as separate parameters for the MR of the terminal and the WUR of the terminal.

According to an embodiment of the disclosure, the method further includes transmitting information on a candidate beam reference signal when the BFR is identified to be triggered, wherein the candidate beam reference signal is identified from among remaining candidate beam reference signals excluding one or more candidate beam reference signals associated with the first reference signal among a plurality of candidate beam reference signals included in a candidate beam reference signal list, and wherein information on the candidate beam reference signal list and information on an association between the first reference signal and the one or more candidate beam reference signals are received via the higher layer signaling.

The aforementioned embodiment is only a part of preferred embodiments of the disclosure, and many embodiments reflecting the technical features of various embodiments of the disclosure can be derived and understood by a person skilled in the art based on the detailed description below.

**[Advantageous Effects of Invention]**

The disclosure provides a device and method capable of effectively providing a service in a mobile communication system.

The effects that can be obtained from the disclosure are not limited to those mentioned above, and other effects not mentioned will be clearly understood by a person skilled in the art based on the detailed description below.

**[Brief Description of Drawings]**

FIG. 1 illustrates a basic structure of a time-frequency resource domain in a wireless communication system according to various embodiments of the disclosure.

FIG. 2 illustrates a time domain mapping structure of a synchronization signal and a beam sweeping operation according to various embodiments of the disclosure.

FIG. 3 illustrates a signal flow for a random access (RA) according to various embodiments of the disclosure.

FIG. 4 illustrates a signal flow for a UE to report UE capability information to a base station according to various embodiments of the disclosure.

FIG. 5 is a diagram illustrating a response process of a base station to a BFR request signal of a UE during a PCell BFR operation according to an embodiment of the disclosure.

FIG. 6 is a diagram illustrating a response process of a base station to a BFR request signal of a UE during a SCell BFR operation according to an embodiment of the disclosure.

FIG. 7 is a diagram illustrating a response process of a base station to a BFR request signal of a UE during a BFR operation per TRP according to an embodiment of the disclosure.

FIG. 8 illustrates an example of state transitions of a base station and a UE and a state of the UE according to a state of the base station, according to various embodiments of the disclosure.

FIG. 9 illustrates an example of a beam failure detection and beam failure recovery scheme of a UE having a wake-up receiver, according to various embodiments of the disclosure.

FIG. 10 illustrates an example of a beam failure detection and beam failure recovery scheme of a UE having a wake-up receiver, according to various embodiments of the disclosure.

FIG. 11 illustrates an example of a beam failure detection and beam failure recovery scheme of a UE having a wake-up receiver, according to various embodiments of the disclosure.

FIG. 12 illustrates an operational flow for beam failure detection and beam failure recovery of a UE having a wake-up receiver, according to various embodiments of the disclosure.

FIG. 13 illustrates an operational flow of a base station according to various embodiments of the disclosure.

FIG. 14 is a diagram illustrating a structure of a UE according to various embodiments of the disclosure.

FIG. 15 is a diagram illustrating a structure of a base station according to various embodiment of the disclosure.

**[Mode for the Invention]**

Hereinafter, embodiments of the disclosure will be described in detail with reference to the accompanying drawings. It should be noted that in the drawings, the same components are denoted by the same reference numerals as far as possible. In addition, detailed descriptions of well-known functions and components that may obscure the subject matter of the disclosure will be omitted.

In describing embodiments of the disclosure, descriptions of technical contents that are well known in the art to which the disclosure pertains and are not directly related to the disclosure will be omitted. This is to clearly convey the subject matter of the disclosure without obscuring it by omitting unnecessary descriptions.

For the same reason, some components are exaggerated, omitted, or schematically illustrated in the accompanying drawings. In addition, the size of each component does not entirely reflect its actual size. In each drawing, the same or corresponding components are denoted by the same reference numerals.

Advantages and features of the disclosure and methods for achieving them will become apparent from the following detailed description of embodiments in conjunction with the accompanying drawings. However, the disclosure is not limited to the embodiments disclosed below, but may be implemented in various different forms. These embodiments are provided only to make the disclosure complete and to fully inform those skilled in the art of the scope of the disclosure, and the disclosure is defined only by the scope of claims. Like reference numerals refer to like elements throughout the specification.

It will be understood that each block of the flowchart illustrations, and combinations of blocks in the flowchart illustrations, may be implemented by computer program instructions. These computer program instructions may be

provided to a processor of a general purpose computer, special purpose computer, or other programmable data processing apparatus to produce a machine, such that the instructions, which are executed via the processor of the computer or other programmable data processing apparatus, generate means for implementing the functions specified in the flowchart block(s). These computer program instructions may also be stored in a computer usable or computer-readable memory that may direct a computer or other programmable data processing apparatus to function in a particular manner, such that the instructions stored in the computer usable or computer-readable memory produce an article of manufacture including instruction means that implement the function specified in the flowchart block(s). The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block(s).

In addition, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term 'unit' used in embodiments refers to a software or hardware component such as a field programmable gate array (FPGA) or application specific integrated circuit (ASIC), and the 'unit' performs certain tasks. However, the 'unit' is not limited to software or hardware. The 'unit' may be constituted to reside on an addressable storage medium and constituted to execute on one or more processors. Thus, the 'unit' may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and 'units' may be combined into fewer components and 'units' or further separated into additional components and 'units'. In addition, the components and 'units' may be implemented to operate one or more central processing units (CPUs) in a device or a secure multimedia card. Also, in an embodiment, the 'unit' may include one or more processors.

In the following description of the disclosure, a detailed description of known functions or components will be omitted when it may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various kinds of identification information, and the like are illustratively used for convenience of explanation. Therefore, the disclosure is not limited by the terms as used below, and other terms referring to subjects having equivalent technical meanings may be used.

In the following description, a physical channel and a signal may be used interchangeably with data or a control signal. For example, physical downlink shared channel (PDSCH) is a term referring to a physical channel through which data is transmitted, but PDSCH may also be used to refer to data. That is, in the disclosure, the expression 'transmitting a physical channel' may be interpreted equivalently to the expression 'transmitting data or a signal through a physical channel'.

In the disclosure, higher-layer signaling refers to a signal transmission method in which a signal is transmitted from a base station to a terminal through a downlink data channel of a physical layer, or from a terminal to a base station through an uplink data channel of a physical layer. Higher-layer signaling may be understood as radio resource control (RRC) signaling or a media access control (MAC) control element (CE).

In addition, although the disclosure describes various embodiments using terms used in some communication standards (e.g., 3rd Generation Partnership Project (3GPP)), this is merely an example for description. Various embodiments of the disclosure may be easily modified and applied to other communication systems. Also, the term 'terminal' may refer to not only cellular phones, smartphones, and Internet of Things (IoT) devices, and sensors, but also other wireless communication devices.

Hereinafter, a base station is an entity that performs resource allocation for a terminal and may be at least one of a gNode B (gNB), an eNode B (eNB), a Node B, a base station (BS), a radio access unit, a base station controller, or a node on a network. A terminal may include a user equipment (UE), a mobile station (MS), a cellular phone, a smartphone, a computer, or a multimedia system capable of performing communication functions. However, examples are not limited thereto. In addition, although various embodiments of the disclosure are described using a system based on LTE, LTE-A, or NR as an example, the various embodiments may be applied to other communication systems having a similar technical background or channel type. Furthermore, various embodiments of the disclosure may be applied to other communication systems through some modifications within a range that does not significantly depart from the scope thereof, as determined by those skilled in the art.

In order to handle the recent explosive increase in mobile data traffic, the initial standard for the 5$^{th}$ generation (5G) system or new radio (NR) access technology, which is the next-generation communication system following long term

evolution (LTE) (or evolved universal terrestrial radio access (E-UTRA)) and LTE-advanced (LTE-A) (or E-UTRA evolution), has been completed. While the legacy mobile communication systems have focused on traditional voice/data communications, the 5G system aims to satisfy various services and requirements, such as the enhanced Mobile BroadBand (eMBB) service for improving the existing voice/data communications, the Ultra-Reliable and Low Latency Communication (URLLC) service, and the massive Machine Type Communication (MTC) service for supporting large-scale machine-to-machine communications.

While a system transmission bandwidth per single carrier in legacy LTE and LTE-A is limited to a maximum of 20 MHz, the 5G system aims to provide ultra-high-speed data services reaching several Gbps by utilizing a much wider ultra-wide bandwidth. Accordingly, the 5G system is considering ultra-high frequency bands from several GHz up to 100 GHz as candidate frequencies, where securing ultra-wide bandwidth frequencies is relatively easy. In addition, it is possible to secure wide bandwidth frequencies for the 5G system through frequency reassignment or allocation in frequency bands ranging from several hundred MHz to several GHz used in the legacy mobile communication system.

Ultra-high frequency band radio waves are also referred to as millimeter waves (mmWave) because their wavelengths are on the order of millimeters. However, in ultra-high frequency bands, the path loss of radio waves increases in proportion to the frequency band, reducing the coverage of mobile communication systems.

To overcome the drawback of reduced coverage in ultra-high frequency bands, beamforming technology is applied, which concentrates the radiated energy of radio waves to a predetermined target point by using a plurality of antennas and thereby increases the transmission distance of radio waves. For example, a signal to which the beamforming technology is applied has a relatively narrow beam width of the signal, and the radiated energy is concentrated within the narrowed beam width, thereby increasing the transmission distance. The beamforming technology can be applied to both transmitting and receiving ends. In addition to the effect of increasing coverage, the beamforming technology also has the effect of reducing interference in areas other than the beamforming direction. For the beamforming technology to operate properly, accurate measurement and feedback methods of the transmission/reception beams are required. The beamforming technology can be applied to a control channel or data channel that corresponds one-to-one between a certain UE and a base station. Additionally, the beamforming technology can be applied to common signals transmitted by a base station to a plurality of UEs within a system, such as a synchronization signal, a physical broadcast channel (PBCH), a control channel for transmitting system information, and a data channel, to increase coverage. When the beamforming technology is applied to common signals, beam sweeping technology, which transmits signals while changing the beam direction, is additionally applied so that the common signal can reach UEs located at any location within a cell.

Another requirement of the 5G system is an ultra-low latency service with a transmission delay of approximately one millisecond (ms) between the transmitting and receiving ends. One scheme of reducing the transmission delay is to design a frame structure based on a short transmission time interval (TTI) compared to LTE and LTE-A. TTI is the basic time unit for scheduling, and the TTI of the legacy LTE and LTE-A systems is 1 ms, which corresponds to the length of one subframe. For example, to satisfy the requirements for ultra-low latency services of 5G systems, possible short TTIs are 0.5 ms, 0.25 ms, 0.125 ms, etc., which are shorter than those of the legacy LTE and LTE-A systems.

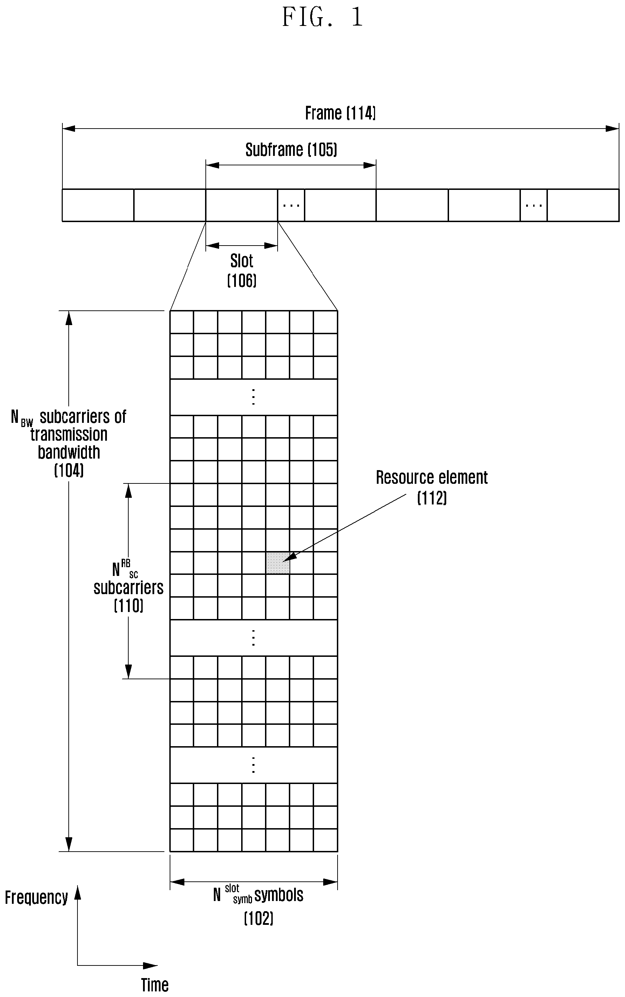

FIG. 1 illustrates a basic structure of a time-frequency resource domain in a wireless communication system according to various embodiments of the disclosure. Specifically, FIG. 1 is a diagram showing the basic structure of the time-frequency resource domain, which is a radio resource area in which data or a control channel of the 5G system is transmitted.

Referring to FIG. 1, a horizontal axis in FIG. 1 represents a time domain, and a vertical axis represents a frequency domain. The minimum transmission unit in the time domain of the wireless communication system is an orthogonal frequency division multiplexing (OFDM) symbol, and $N_{symb}^{slot}$ symbols 102 can constitute one slot 106, and $N_{slot}^{subframe}$ slots can constitute one subframe 105. The length of the subframe is 1.0 ms, and ten subframes may constitute a frame 114 of 10 ms. The minimum transmission unit in the frequency domain is a subcarrier, and the entire system transmission bandwidth may consist of a total of $N_{BW}$ subcarriers 104.

In the time-frequency domain, the basic unit of resources is a resource element (RE) 112, which may be represented by an OFDM symbol index and a subcarrier index. A resource block (RB) (or physical resource block (PRB)) may be defined as $N_{sc}^{RB}$ consecutive subcarriers 110 in the frequency domain. In the 5G system, $N_{sc}^{RB}$ is 12, and a data rate may increase in proportion to the number of RBs scheduled for a UE.

In the 5G system, a base station may map data in RB units and generally perform scheduling for RBs that constitute one slot for a given UE. For example, in the 5G system, the basic time unit for scheduling may be a slot, and the basic frequency unit for scheduling may be an RB.

The number of OFDM symbols $N_{symb}^{slot}$ is determined depending on the length of cyclic prefix (CP) added to each symbol to prevent interference between symbols. For example, if a normal CP is applied, $N_{symb}^{slot}$ may be 14, and if an extended CP is applied, $N_{symb}^{slot}$ may be 12. The extended CP is applied to a system having a relatively longer radio transmission distance than the normal CP, thereby maintaining orthogonality between symbols. In the case of the normal CP, since the ratio of the CP length to the symbol length is maintained at a constant value, the overhead caused by the CP can be maintained constant regardless of the subcarrier spacing. For example, as the subcarrier spacing decreases, the symbol length increases, and thus the CP length also increases. Conversely, as the subcarrier spacing increases, the symbol length decreases, and thus the CP length is reduced. The symbol length and the CP length are inversely proportional to the subcarrier spacing.

In the wireless communication system, various frame structures can be supported by adjusting subcarrier spacing to satisfy various services and requirements. For example, in terms of an operating frequency band, a larger subcarrier spacing is more advantageous for phase noise compensation in a high-frequency band. In terms of transmission time, a larger subcarrier spacing results in a shorter symbol length in the time domain, and consequently, a shorter slot length, which is advantageous for supporting ultra-low latency services such as URLLC. In terms of cell size, as a longer CP length can support a larger cell, a smaller subcarrier spacing can support a relatively larger cell. Here, a cell refers to an area covered by a single base station in mobile communications.

The subcarrier spacing, the CP length, and the like are essential information for OFDM transmission and reception. Efficient transmission and reception are enabled only when a base station and a UE recognize the subcarrier spacing and the CP length as common values.

Table 1 below shows the relationship among subcarrier spacing configuration ($\mu$), subcarrier spacing ($\Delta f$), and CP length supported by the 5G system.

[Table 1]

| $\mu$ | $\Delta f = 2^{\mu} \cdot 15$ [kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

Table 2 below shows the number of symbols per slot ($N_{symb}^{slot}$), the number of slots per frame ($N_{slot}^{frame,\mu}$), and the number of slots per subframe ($N_{slot}^{subframe,\mu}$`), for each subcarrier spacing configuration ($\mu$) in the case of the normal CP.

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 below shows the number of symbols per slot ($N_{symb}^{slot}$), the number of slots per frame ($N_{slot}^{frame,\mu}$), and

the number of slots per subframe ( $N_{\text{slot}}^{\text{subframe},\mu}$ ), for each subcarrier spacing configuration (μ) in the case of the extended CP.

[Table 3]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

In the initial stage of introducing the 5G system, coexistence or dual mode operation with legacy LTE or/and LTE-A (hereinafter, LTE/LTE-A) systems was expected. Accordingly, the legacy LTE/LTE-A may provide stable system operation to a UE, while the 5G system may serve to provide enhanced services to the UE. Therefore, the frame structure of the 5G system needs to include at least the frame structure or a set of essential parameters (e.g., subcarrier spacing = 15 kHz) of the LTE/LTE-A.

For example, comparing a frame structure with subcarrier spacing configuration $\mu=0$ (hereinafter, frame structure A) and a frame structure with subcarrier spacing configuration $\mu=1$ (hereinafter, frame structure B), the subcarrier spacing and RB size of frame structure B are twice those of frame structure A, whereas the slot length and symbol length are half those of freame structure A. In the case of frame structure B, two slots may constitute one subframe, and 20 subframes may constitute one frame.

By generalizing the frame structure of the 5G system, high scalability is provided by ensuring that a set of essential parameters, such as subcarrier spacing, CP length, and slot length, has an integer multiple relationship between different frame structures. Additionally, a subframe with a fixed length of 1 ms may be defined to represent a reference time unit independent of the frame structure.

The frame structure can be applied to correspond to various scenarios. In terms of cell size, since a longer CP length can support a larger cell, frame structure A can support a relatively larger cell than frame structure B. In terms of operating frequency band, since a larger subcarrier spacing is more advantageous for compensating for phase noise in a high-frequency band, frame structure B can support a relatively higher operating frequency than frame structure A. In terms of service, since a shorter slot length, which is the basic time unit for scheduling, is advantageous for supporting ultra-low latency services such as URLLC, frame structure B may be more suitable for the URLLC services than frame structure A.

In the following description of the disclosure, uplink (UL) may refer to a radio link through which a UE transmits data or a control signal to a base station, and downlink (DL) may refer to a radio link through which a base station transmits data or a control signal to a UE.

In an initial access step in which a UE first accesses a system, the UE may establish downlink time and frequency synchronization from a synchronization signal transmitted by a base station through cell search, and acquire a cell identity (cell ID). The UE may receive a physical broadcast channel (PBCH) using the acquired cell ID and acquire a master information block (MIB), which is essential system information, from the PBCH. Additionally, the UE may acquire cell-common transmission/reception-related control information by receiving system information block (SIB) transmitted by the base station. The cell-common transmission/reception-related control information may include random access (RA)-related control information, paging-related control information, and common control information for various physical channels.

The synchronization signal serves as a reference for cell search, and a specific subcarrier spacing may be applied to suit a channel environment (e.g., phase noise) of each frequency band. For a data channel or a control channel, the subcarrier spacing may be adaptively applied according to a service type to support various services as described above.

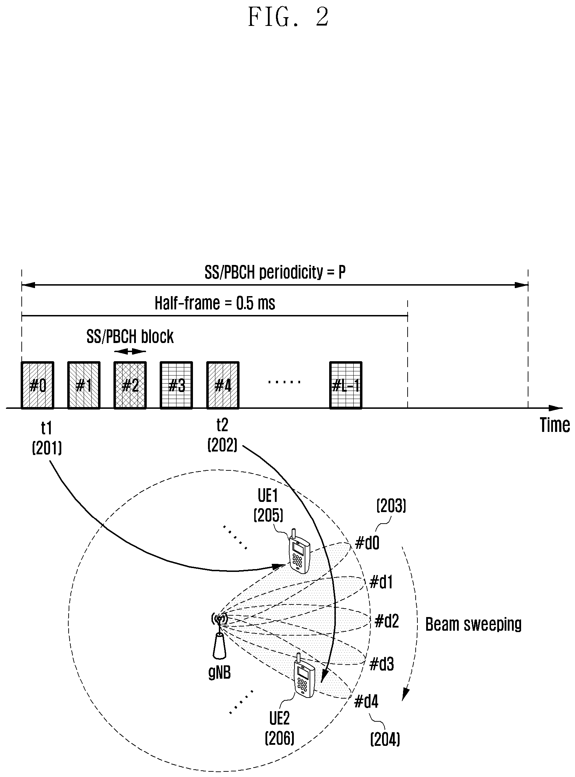

FIG. 2 illustrates a time domain mapping structure of a synchronization signal and a beam sweeping operation according to various embodiments of the disclosure.

For the description of the disclosure, the following components may be predefined.

- PSS (Primary Synchronization Signal): A signal that serves as a reference for DL time/frequency synchronization and provides a portion of cell ID information.
- SSS (Secondary Synchronization Signal): A signal that serves as a reference for DL time/frequency synchronization and provides the remaining portion of the cell ID information. Additionally, it may serve as a reference signal for demodulation of a PBCH.
- PBCH (Physical Broadcast Channel): Provides a master information block (MIB), which is essential system information required for transmission and reception of a data channel and a control channel. The essential system

information may include control information related to a search space indicating radio resource mapping information of a control channel, scheduling control information for a separate data channel for transmitting system information, and a system frame number (SFN) which is a frame-unit index serving as a timing reference.

- SS/PBCH Block (Synchronization Signal/PBCH Block or SSB): An SS/PBCH block may consist of N OFDM symbols and include a combination of a PSS, an SSS, and a PBCH. In a system to which beam sweeping is applied, the SS/PBCH block may be a minimum unit for applying the beam sweeping. In the 5G system, N may be 4. A base station may transmit up to L SS/PBCH blocks, and the L SS/PBCH blocks may be mapped within a half-frame (0.5 ms). The L SS/PBCH blocks may be periodically repeated with a predetermined periodicity P. The periodicty P may be notified to a UE by the base station via signaling. If there is no separate signaling for the periodicity P, the UE may apply a predefined default value.

FIG. 2 illustrates an example in which beam sweeping is applied in units of SS/PBCH blocks over time. In the example of FIG. 2, UE1 205 may receive an SS/PBCH block at time t1 201 using a beam radiated in the direction #d0 203 by beamforming applied to SS/PBCH block #0. UE2 206 may receive an SS/PBCH block at time t2 202 using a beam radiated in the direction #d4 204 by beamforming applied to SS/PBCH block #4. A UE can acquire an optimal synchronization signal through a beam radiated from a base station toward the direction where the UE is located. For example, it may be difficult for UE1 205 to acquire time/frequency synchronization and essential system information from an SS/PBCH block transmitted through a beam radiated in the direction #d4, which is far from the location of UE1.

In addition to the initial access procedure, a UE may receive SS/PBCH blocks to determine whether the radio link quality of a current cell is maintained above a certain level or to determine whether a currently received beam is maintained above a certain level (e.g., beam failure detection). Furthermore, in a handover procedure in which the UE moves from a current cell to a neighbor cell, the UE may receive an SS/PBCH block of the neighbor cell to evaluate the radio link quality of the neighbor cell and acquire the time/frequency synchronization of the neighbor cell.

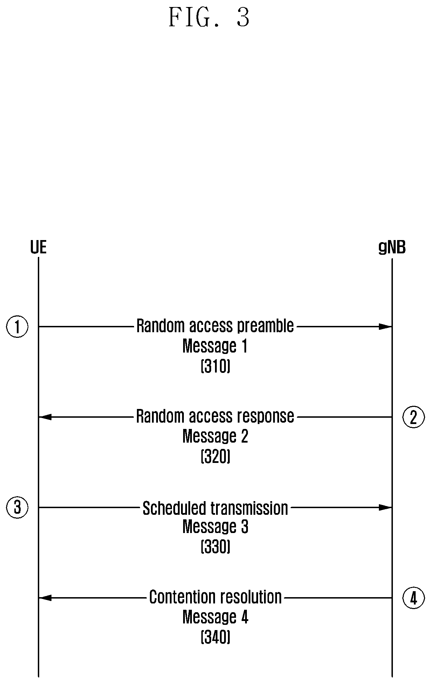

After acquiring the MIB and system information from the base station through the initial access procedure, the UE may perform a random access procedure to transition its link with the base station to a connected state (or RRC_CONNECTED state). Upon completing the random access procedure, the UE enters the connected state, enabling one-to-one communication between the base station and the UE. Herefinafter, the random access procedure will be described in detail with reference to FIG. 3.

FIG. 3 illustrates a signal flow for a random access (RA) according to various embodiments of the disclosure. FIG. 3 illustrates an example of the random access procedure, and the disclosure is not limited thereto. Furthermore, the disclosure is not limited to the 4-step random access procedure illustrated in FIG. 3, and may also be applied to a 2-step random access procedure (e.g., transmission and reception of Message A (a message including information corresponding to Message 1 and Message 3) and transmission and reception of Message B (a message including information corresponding to Message 2 and Message 4)).

Referring to FIG. 3, in step 310, a UE may transmit a random access preamble to a base station. The random access preamble, which is the first transmission message by the UE in the random access procedure, may be referred to as Message 1. The base station may measure a transmission delay value between the UE and the base station from the random access preamble to eatablish uplink synchronization. At this time, the UE may randomly select a random access preamble to be used from a random access preamble set provided in advance via system information. The initial transmission power of the random access preamble may be determined based on a path loss, measured by the UE, between the base station and the UE. Additionally, the UE may determine a transmission beam direction of the random access preamble based on a synchronization signal received from the base station and transmit the random access preamble.

In step 320, the base station may transmit a random access response (RAR) (or Message 2) in response to the random access preamble received in step 310. The base station may transmit an uplink transmission timing adjustment command to the UE based on the transmission delay value measured from the random access preamble. Furthermore, the base station may transmit scheduling information, including an uplink resource assignment and a power control command to be used by the UE. The scheduling information may also include control information for the uplink transmission beam of the UE.

In step 320, if the UE fails to receive the RAR (or Message 2), which includes scheduling information for Message 3, from the base station within a predetermined time period, the UE may perform step 310 again. In a case where step 310 is performed again, the UE may increase the transmission power of the random access preamble by a predetermined step size (e.g., power ramping) for the transmission, thereby increasing the probability of the base station successfully receiving the random access preamble.

In step 330, the UE may transmit uplink data (Message 3) including its UE ID to the base station using the uplink resources allocated in step 320. The UE may transmit the uplink data including the UE ID to the base station through an uplink data channel (a physical uplink shared channel (PUSCH)). The transmission timing of the uplink data channel for transmitting Message 3 may follow the timing control command received from the base station in step 320. The

transmission power of the uplink data channel for transmitting Message 3 may be determined in consideration of the power control command received from the base station in step 320 and a power ramping value of the random access preamble. The uplink data channel for transmitting Message 3 may refer to a first uplink data signal that the UE transmits to the base station after transmitting the random access preamble.

If the base station determines that the UE has performed random access without collision with other UEs, the base station may transmit data (e.g., Message 4) including the ID of the UE that transmitted the uplink data in step 330 to the UE in step 340. If the UE receives the signal transmitted by the base station in step 340 from the base station, the UE may determine that the random access is successful. The UE may transmit hybrid automatic repeat request acknowledgement (HARQ-ACK) information indicating whether Message 4 has been successfully received to the base station through an uplink control channel (a physical uplink control channel (PUCCH)).

If the data transmitted by the UE in step 330 collides with data from another UE, such that the base station fails to receive a data signal from the UE, the base station may not transmit further data to the UE. If the UE fails to receive data transmitted from the base station in step 340 within a predetermined period of time, the UE may determine that the random access procedure has failed and may proceed again from step 310.

When the UE successfully completes the random access procedure, the UE transitions to a connected state (or RRC_CONNECTED state), enabling one-to-one communication between the base station and the UE. The base station may receive UE capability information from the UE in the connected state and adjust scheduling by referring to the received UE capability information. Through the UE capability information, the UE may inform the base station whether the UE supports a predetermined function, a maximum allowable value of the function supported by the UE, and the like. Accordingly, the UE capability information reported to the base station may vary for each UE.

For example, the UE may report UE capability information including at least one of the following types of control information to the base station:

- Control information related to a frequency band supported by the UE;
- Control information related to a channel bandwidth supported by the UE;
- Control information related to a maximum modulation scheme supported by the UE;
- Control information related to a maximum number of beams supported by the UE;
- Control information related to a maximum number of layers supported by the UE;
- Control information related to CSI reporting supported by the UE;
- Control information regarding whether the UE supports frequency hopping;
- Control information related to bandwidth when carrier aggregation (CA) is supported; and
- Control information regarding whether cross-carrier scheduling is supported when carrier aggregation is supported.

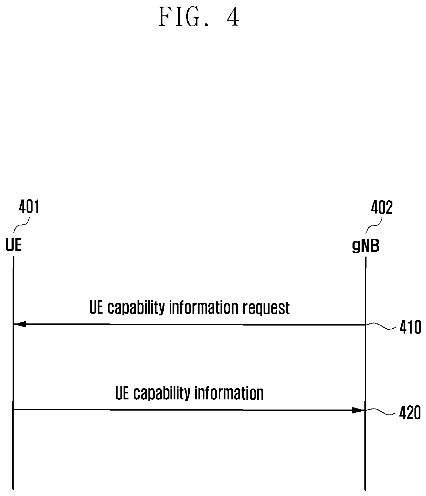

FIG. 4 illustrates a signal flow for a UE to report UE capability information to a base station according to various embodiments of the disclosure.

Referring to FIG. 4, in step 410, the base station 402 may transmit a UE capability information request message to the UE 401. Based on the UE capability information request from the base station 402, the UE 401 may transmit UE capability information to the base station in step 420. According to an embodiment, the UE 401 may transmit the UE capability information to the base station 402 regardless of whether a request for the UE capability information is received from the base station 402. That is, the UE may report the capability information even without an explicit request from the base station. In this case, step 410 may be omitted.

Based on the transmission and reception process of the UE capability information, the UE connected to the base station may perform one-to-one communication with the base station as the UE in the RRC_CONNECTED state. The UE in the RRC_CONNECTED state may perform the following operations:

- Monitoring of a physical downlink control channel (PDCCH);
- Radio link monitoring; and
- Beam failure detection and beam failure recovery.

First, monitoring of the PDCCH by the UE in the RRC_CONNECTED state will be described in detail. If discontinuous reception (DRX) is not configured by the base station, a medium access control (MAC) entity of the UE may monitor the PDCCH continuously. If the DRX is configured for the MAC entity of the UE via higher layer signaling from the base station, the MAC entity of the UE may monitor the PDCCH discontinuously using a DRX operation for all activated serving cells. The UE may receive parameters related to the DRX operation (e.g., including at least one of a drx-Cycle, a drx-onDurationTimer, a drx-InactivityTimer, or a drx-SlotOffset) from the base station via higher layer signaling and monitor the PDCCH discontinuously based on these parameters. In the disclosure, monitoring the PDCCH by the UE in the RRC_CONNECTED state using the DRX may be referred to as performing a CONNECTED-DRX (C-DRX) operation or performing C-DRX.

Next, the radio link monitoring of the UE in the RRC_CONNECTED state will be described in detail. The UE performs the radio link monitoring for a serving cell (or a primary serving cell (PCell) when carrier aggregation is configured) using a channel state information-reference signal (CSI-RS) or an SS/PBCH signal. Performing the radio link monitoring can be described as measuring the quality of a radio link using the aforementioned signals to determine whether the radio link is in an in-sync state or an out-of-sync state. Which signal between the CSI-RS and the SS/PBCH signal is to be used for the radio link monitoring may be configured via higher layer signaling from the base station.

When measuring the quality of the radio link, an evaluation period for measuring and evaluating whether the radio link is in-sync or out-of-sync will be described. An in-sync evaluation period and an out-of-sync evaluation period may be differently determined depending on whether DRX for PDCCH monitoring is configured by the base station and, if the DRX is configured, according to a DRX cycle value. Next, an indication period, in which a physical layer of the UE transmits the evaluated in-sync or out-of-sync indication to a higher layer of the UE as a result of the measurement and evaluation, will be described. If the DRX is not configured, the indication period is determined as a maximum value between 10 ms and the shortest period of resources for radio link monitoring. Conversely, if the DRX is configured, the indication period is determined as a maximum value between the DRX cycle and the shortest period of resources for radio link monitoring.

The in-sync state will be described below. In a case where radio link quality for any resources in a resource set for radio link monitoring is better than a threshold Q_in received from a configuration of the base station, the physical layer of the UE transmits the in-sync indication to the higher layer of the UE in a frame where the radio link quality is evaluated. To determine the in-sync state of the radio link quality, the UE determines whether a block error rate (BLER), in a case of performing PDCCH decoding based on hypothetical PDCCH parameters, is smaller than a predefined value. The predefined value may be, for example, 2%. The hypothetical PDCCH parameters may be differently determined depending on which signal is used to perform the radio link monitoring.

The out-of-sync state will be described below. In a case where radio link quality for any resources in a resource set for radio link monitoring is worse than a threshold Q_out received from a configuration of the base station, the physical layer of the UE transmits the out-of-sync indication to the higher layer of the UE in a frame where the radio link quality is evaluated. To determine the out-of-sync state of the radio link quality, the UE determines whether a BLER, in a case of performing PDCCH decoding based on the hypothetical PDCCH parameters, is larger than a predefined value. The predefined value may be, for example, 10%. The hypothetical PDCCH parameters may be differently determined depending on which signal is used to perform the radio link monitoring.

A UE's higher layer (or the UE) starts a T310 timer after receiving N310 consecutive out-of-sync indications. If the UE receives N311 consecutive in-sync indications, the T310 timer is stopped. Otherwise, the UE declares a radio link failure (RLF) and starts a T311 timer. The UE performs cell selection to find a suitable cell. If the T311 timer expires without finding a suitable cell, the UE transitions to an RRC_IDLE state. If a suitable cell is found, the T311 timer is stopped, and the UE transmits an RRC Reestablishment Request message to the base station of the found cell and starts a T301 timer. If the RRC reestablishment procedure is not successfully completed and the T301 timer expires, the UE transitions to the RRC_IDLE state. If the RRC reestablishment procedure is successfully completed within the T301 timer, the UE transitions to a normal RRC_CONNECTED state.

Parameters and timers for performing procedures related to radio link monitoring and radio link failure, such as the N310, the T310 timer, the N311, the T311 timer, and the T301 timer, may be configured for the UE by the base station via higher layer signaling.

Next, beam failure detection (BFD) and beam failure recovery (BFR) of the UE in the RRC_CONNECTED state will be described in detail. The UE performs the beam failure detection for a serving cell using a CSI-RS or an SS/PBCH signal. Performing the beam failure detection may be described as measuring the quality of a beam using the aforementioned signals to determine whether a reception state of the beam is reliable (e.g., whether a block error rate (BLER) of a hypothetical PDCCH for the measured beam quality is smaller than a predefined value).

A case where the reception state of the beam is not reliable, that is, a case where the block error rate of the hypothetical PDCCH for the measured beam quality is equal to or larger than the predefined value, is defined as a beam failure instance (BFI). Which signal between the CSI-RS and the SS/PBCH signal is to be used for performing the beam failure detection may be configured via higher layer signaling from the base station. To determine the block error rate of the hypothetical PDCCH, the UE determines whether the block error rate in a case of performing PDCCH decoding is larger than a predefined value based on hypothetical PDCCH parameters (e.g., a specific DCI format, the number of OFDM symbols of a PDCCH, a PDCCH aggregation level, a PDCCH bandwidth, a subcarrier spacing, a resource element group (REG) bundle size, a cyclic prefix (CP) length, and the like). The predefined value may be, for example, 10%. The hypothetical PDCCH parameters may be differently determined depending on which signal is used to perform the beam failure detection.

When the beam failure instance (BFI) increases by one, a timer associated with the beam failure instance (beamFailureDetectionTimer) is restarted. If the UE (or a MAC layer of the UE) does not detect an additional BFI until the timer expires, the accumulated number of beam failure instances (BFI_COUNTER) is reset.

In a case where the accumulated number of beam failure instances is equal to or larger than a maximum number

of beam failure instances (beamFailureInstanceMaxCount) configured by the base station via higher layer signaling, the UE (or the MAC layer of the UE) may trigger beam failure recovery (BFR). When the beam failure recovery is triggered, the UE (or the MAC layer of the UE) may perform the beam failure recovery by performing random access to the base station using a resource or a random access preamble configured for a best candidate beam. The UE may perform contention-free random access (CFRA) using the random access preamble and a control resource set (CORESET) configured by the base station for the beam failure recovery. If the CFRA fails, if no best candidate beam is allocated for the CFRA, or if no CFRA resource or random access preamble is configured, the UE may perform contention-based random access (CBRA) to perform the beam failure recovery.

Next, in contrast to the RRC_CONNECTED state, a UE that is not connected to a base station may be in an RRC_IDLE state. The UE in the RRC_IDLE state may perform the following procedures:

- Performing a UE-specific discontinuous reception (DRX) cycle configured via higher layer signaling. Performing the DRX cycle by the UE in the RRC_IDLE state may be referred to as performing an IDLE-DRX (I-DRX) operation or performing I-DRX;
- Receiving a paging message from a core network;
- Acquiring system information;
- Performing a measurement operation and cell selection/reselection related to a serving cell (or a camped-on cell);
- Performing a measurement operation and cell reselection related to neighboring cells; and
- Receiving a paging early indication (PEI).

Describing the measurement operation and cell selection/reselection related to the serving cell (or the camped-on cell) in more detail, the UE may measure a synchronization signal-reference signal received power (SS-RSRP) and an SS-RSRP level at least every M1*N1 DRX cycles and evaluate a cell selection criterion S based on the measured values. Here, M1=2 if an SSB-based measurement timing configuration (SMTC) periodicity is larger than 20 ms and a DRX cycle is equal to or smaller than 0.64 s; otherwise, M1=1.

N1 may be determined according to the following Table 4.

[Table 4]

| DRX cycle[s] | N1 | | | $N_{serv}$ [number of DRX cycles] |
|---|---|---|---|---|
| | FR1 | FR2-1 | FR2-2 | |
| 0.32 | 1 | 8 | 12 | M1*N1*4 |
| 0.64 | | 5 | 8 | M1*N1*4 |
| 1.28 | | 4 | 6 | N1*2 |
| 2.56 | | 3 | 5 | N1*2 |

The cell selection criterion S may be satisfied when $S_{rxlev} > 0$ (corresponding to SS-RSRP) and $S_{qual} > 0$ (corresponding to synchronization signal-reference signal received quality (SS-RSRQ)).

$$S_{rxlev} = Q_{rxlevmeas} - (Q_{rxlevmin} + Q_{rxlevminoffset}) - P_{compensation} - Q_{offsettemp}$$

$$S_{qual} = Q_{qualmeas} - (Q_{qualmin} + Q_{qualminoffset}) - Q_{offsettemp}$$

Here, $Q_{rxlevmeas}$ is the measured SS-RSRP, and $Q_{qualmeas}$ is the measured SS-RSRQ. $Q_{rxlevmin}$ is a minimum required receive signal strength level in the serving cell and may be received by the UE via system information. $Q_{qualmin}$ is a minimum required receive signal quality level in the serving cell and may be received by the UE via the system information. For descriptions of the parameters, Table 5 may be referred to.

[Table 5]

| | |
|---|---|
| Srxlev | Cell selection RX level value (dB) |
| Squal | Cell selection quality value (dB) |
| $Qoffset_{temp}$ | Offset temporarily applied to a cell as specified in TS 38.331 [3] (dB) |
| $Q_{rxlevmeas}$ | Measured cell RX level value (RSRP) |

(continued)

| | |
|---|---|
| $Q_{qualmeas}$ | Measured cell quality value (RSRQ) |
| $Q_{rxlevmin}$ | Minimum required RX level in the cell (dBm). If the UE supports SUL frequency for this cell, $Q_{rxlevmin}$ is obtained from q-*RxLevMinSUL,* if present, in *SIB1, SIB2* and *SIB4,* additionally, if $Q_{rxlevminoffsetcellSUL}$ is present in *SIB3* and *SIB4* for the concerned cell, this cell specific offset is added to the corresponding Qrxlevmin to achieve the required minimum RX level in the concerned cell;<br>else $Q_{rxlevmin}$ is obtained from *q-RxLevMin* in *SIB1, SIB2* and *SIB4,* additionally, if $Q_{rxlevminoffsetcell}$ is present in *SIB3* and *SIB4* for the concerned cell, this cell specific offset is added to the corresponding Qrxlevmin to achieve the required minimum RX level in the concerned cell. |
| $Q_{qualmin}$ | Minimum required quality level in the cell (dB). Additionally, if $Q_{qualminoffsetcell}$ is signalled for the concerned cell, this cell specific offset is added to achieve the required minimum quality level in the concerned cell. |
| $Q_{rxlevminoffset}$ | Offset to the signalled $Q_{rxlevmin}$ taken into account in the Srxlev evaluation as a result of a periodic search for a higher priority PLMN while camped normally in a VPLMN, as specified in TS 23.122 [9]. |
| $Q_{qualminoffset}$ | Offset to the signalled $Q_{qualmin}$ taken into account in the Squal evaluation as a result of a periodic search for a higher priority PLMN while camped normally in a VPLMN, as specified in TS 23.122 [9]. |
| $P_{compensation}$ | For FR1, if the UE supports the *additionalPmax* in the *NR-NS-PmaxList,* if present, in *SIB1, SIB2* and *SIB4:*<br>$max(P_{EMAX1} - P_{PowerClass}, 0) - (min(P_{EMAX2}, P_{PowerClass}) - min(P_{EMAX1}, P_{PowerClass}))$ *(dB);*<br>*else:*<br>$max(P_{EMAX1} - P_{PowerClass}, 0)$ *(dB)*<br>For FR2, $P_{compensation}$ is set to 0.<br>For IAB-MT, $P_{compensation}$ is set to 0. |
| $P_{EMAX1}$, $P_{EMAX2}$ | Maximum TX power level of a UE may use when transmitting on the uplink in the cell (dBm) defined as $P_{EMAX}$ in TS 38.101 [15]. If UE supports SUL frequency for this cell, $P_{EMAX1}$ and $P_{EMAX2}$ are obtained from the *p-Max* for SUL in *SIB1* and *NR-NS-PmaxList* for SUL respectively in *SIB1, SIB2* and *SIB4* as specified in TS 38.331 [3], else $P_{EMAX1}$ and $P_{EMAX2}$ are obtained from the *p-Max* and *NR-NS-PmaxList* respectively in *SIB1, SIB2* and *SIB4* for normal UL as specified in TS 38.331 [3]. |
| $P_{PowerClass}$ | Maximum RF output power of the UE (dBm) according to the UE power class as defined in TS 38.101-1 [15]. |

In determining the measured SS-RSRP, the UE may determine the SS-RSRP of the serving cell by filtering at least two measured values that are separated by at least half of a DRX cycle. In addition, in determining the measured SS-RSRQ, the UE may determine the SS-RSRQ of the serving cell by filtering at least two measured values that are separated by at least half of the DRX cycle.

If the UE determines that the serving cell does not satisfy the cell selection criterion S for $N_{serv}$ consecutive DRX cycles, the UE may initiate measurements of all neighboring cells other than the serving cell. If the UE fails to find a new suitable cell for 10 seconds, the UE may initiate a cell selection procedure for a selected public land mobile network (PLMN).

Next, regarding receiving a paging message from a core network, the UE may monitor one paging occasion (PO) during a DRX cycle. The PO is a set of PDCCH monitoring occasions and may consist of a plurality of time slots (subframes or OFDM symbols) in which paging control information can be received. A paging frame (PF) is one radio frame (10 ms) and may include one or a plurality of POs or a starting point of the PO.

The PF and the PO may be determined by the following equations.

A system frame number (SFN) for the PF is determined by (SFN + PF_offset) mod T = (T div N) * (UE_ID mod N), where PF_offset is an offset for PF determination, T is a DRX cycle, and N is the number of PFs per DRX cycle (cell-specific), which are determined by higher layer signaling such as system information. UE_ID is a UE identifier (5G S-Temporary Mobile Subscriber Identity, 5G-S-TMSI) determined by the core network. The PFs determined by N refer to paging frames commonly applied to UEs within a cell, and in the disclosure, these may be referred to as cell-common PFs.

An index i_s indicating a PO index is determined by i_s = floor(UE_ID/N) mod Ns, where Ns denotes the number of POs in one PF and may be determined by higher layer signaling such as system information.

As an example, assuming PF_offset = 3, T = 128, N = T/4 = 32, Ns = 4, and a UE_ID where UE_ID mod 32 = 1 and floor(UE_ID/32) mod 4 = 1, it can be determined as follows:

$$(\text{SFN} + 3) \bmod 128 = (128 \text{ div } 32) * (\text{UE_ID} \bmod 32) = 4 * 1 = 4,$$

$$\text{i_s} = \text{floor}(\text{UE_ID}/32) \bmod 4 = 1.$$

Accordingly, the PF, which is the paging frame to be received by the UE having the above UE_ID, is determined as radio frames with SFNs of 1, 129, 257, ... among the cell-common PFs, and the PO may be determined as an (i_s + 1)-th PO among four POs within the PF.

Next, regarding the reception of a paging early indication (PEI), the PEI has been introduced to reduce UE power consumption incurred while monitoring and receiving a paging control channel and a paging data channel in every DRX cycle. The UE may monitor or receive one PEI occasion (PEI-O) before receiving a paging message during a DRX cycle. When the UE receives the PEI, and the PEI indicates a paging subgroup to which the UE belongs, the UE may monitor an associated paging occasion (PO). If the UE does not detect the PEI in the PEI occasion or if the PEI does not indicate the paging subgroup to which the UE belongs, the UE does not need to monitor the associated PO, thereby reducing UE power consumption. The UE may determine the PEI occasion as follows. The PEI occasion is located a subframe offset after a radio frame of a reference point, which is located a pei-FrameOffset before the PF containing the associated PO, and the UE may monitor the PEI at the PEI occasion determined in the aforementioned manner. The pei-FrameOffset, the subframe offset, and the like may be determined via higher layer signaling such as system information.

In the 5G system, a new state called RRC_INACTIVE has been defined to reduce the energy and time consumed for initial access of the UE. The UE in the RRC_INACTIVE state may perform the following procedures in addition to the operations performed by the UE in the RRC_IDLE state:

- Storing access stratum (AS) information required for cell access;
- Performing a UE-specific DRX cycle operation configured by an RRC layer;
- Configuring a radio access network (RAN)-based notification area (RNA), which can be utilized during handover by the RRC layer, and performing periodic updates; and
- Monitoring a RAN-based paging message transmitted via an inactive-radio network temporary identifier (I-RNTI).

The UE in the RRC_CONNECTED state may transition to the RRC_INACTIVE or RRC_IDLE state upon receiving an RRC release indication from the base station.

The UE in the RRC_INACTIVE or RRC_IDLE state may transition to the RRC_CONNECTED state by performing a random access and completing all random access procedures.

Hereinafter, a scheduling method in which the base station transmits downlink data to the UE or instructs the UE to transmit uplink data will be described.

Downlink control information (DCI) may be control information that the base station transmits to the UE through a downlink. The DCI may include downlink data scheduling information or uplink data scheduling information for a predetermined UE. In general, the base station may perform channel coding on the DCI independently for each UE and then transmit the DCI to each UE through a physical downlink control channel (PDCCH), which is a downlink physical control channel.

The base station may operate by applying a specific DCI format depending on the purpose, such as whether it is scheduling information for downlink data (downlink assignment), scheduling information for uplink data (uplink grant), or DCI for power control, for the UE to be scheduled.

The base station may transmit downlink data to the UE through a physical downlink shared channel (PDSCH), which is a physical channel for downlink data transmission. The base station may inform the UE of scheduling information, such as a specific mapping position in the time and frequency domains of the PDSCH, a modulation scheme, HARQ-related control information, and power control information, through DCI related to the downlink data scheduling information among the DCIs transmitted through the PDCCH.

The UE may transmit uplink data to the base station through a physical uplink shared channel (PUSCH), which is a physical channel for uplink data transmission. The base station may inform the UE of scheduling information, such as a specific mapping position in the time and frequency domains of the PUSCH, a modulation scheme, HARQ-related control information, and power control information, through DCI related to the uplink data scheduling information among the DCIs transmitted through the PDCCH.

A time-frequency resource to which the PDCCH is mapped may be referred to as a control resource set (CORESET). The CORESET may be configured in the frequency domain with all or part of frequency resources within a bandwidth supported by the UE. In the time domain, the CORESET may be configured with one or a plurality of OFDM symbols, which may be defined as a CORESET duration. The base station may configure one or a plurality of CORESETs for the UE via higher layer signaling (e.g., system information, a master information block (MIB), or radio resource control (RRC) signaling). Configuring the CORESET for the UE by the base station may mean that the base station provides information such as a CORESET identity, a frequency position of the CORESET, and a symbol length of the CORESET to the UE. The information provided by the base station to the UE to configure the CORESET may include at least part of the information included in Table 6 below.

[Table 6]

```
ControlResourceSet ::=      SEQUENCE {
    controlResourceSetId         ControlResourceSetId,
    (CORESSET identity)
    frequencyDomainResources      BIT STRING (SIZE (45)),
    (Frequency domain resources)
    duration                    INTEGER (1..maxCoReSetDuration),
    (CORESSET length)
    cce-REG-MappingType     CHOICE {
    (CCE-to-REG mapping type)
        interleaved                 SEQUENCE {
            reg-BundleSize        ENUMERATED {n2, n3, n6},
          (REG bundle size)
            interleaverSize       ENUMERATED {n2, n3, n6}
          (Interleaver size)
            shiftIndex
    INTEGER(0..maxNrofPhysicalResourceBlocks-1)     OPTIONAL  -- Need
S
          (Interleaver shift)
        },
        nonInterleaved              NULL
    },
    precoderGranularity                   ENUMERATED    {sameAsREG-bundle,
allContiguousRBs},
    (Precoding granulariy)
    tci-StatesPDCCH-ToAddList        SEQUENCE(SIZE      (1..maxNrofTCI-
StatesPDCCH)) OF TCI-StateId    OPTIONAL, -- Cond NotSIB1-initialBWP
    (QCL configuration information)
    tci-StatesPDCCH-ToReleaseList    SEQUENCE(SIZE      (1..maxNrofTCI-
StatesPDCCH)) OF TCI-StateId      OPTIONAL, -- Cond NotSIB1-initialBWP
    (QCL configuration information)
tci-PresentInDCI                    ENUMERATED                       {enabled}
OPTIONAL, -- Need S
```

(QCL indicator configuration information in DCI)
Pdcch-DMRS-ScramblingID INTEGER (0..65535) OPTIONAL, -- Need S
(PDCCH DMRS scramling ID)
}

The CORESET may consist of $N_{RB}^{CORESET}$ RBs in the frequency domain and may consist of $N_{RB}^{CORESET} \in \{1,2,3\}$ symbols in the time domain. An NR PDCCH may consist of one or a plurality of control channel elements (CCEs). One CCE may consist of six resource element groups (REGs), and the REG may be defined as one RB in one OFDM symbol. Within one CORESET, the REGs may be indexed in a time-first order, starting from REG index 0 at the first OFDM symbol and the lowest RB of the CORESET.

An interleaved transmission method and a non-interleaved transmission method may be supported as a transmission method for the PDCCH. The base station may configure whether to perform interleaved or non-interleaved transmission for each CORESET for the UE via higher layer signaling. Interleaving may be performed in units of REG bundles. The REG bundle may be defined as a set of one or a plurality of REGs. The UE may determine a CCE-to-REG mapping scheme in a corresponding CORESET based on whether the interleaved or non-interleaved transmission is configured by the base station, in a manner such as Table 7 below.

[Table 7]

The CCE-to-REG mapping for a control-resource set can be interleaved or non-interleaved and is described by REG bundles:

- REG bundle $i$ is defined as REGs $\{iL, iL+1, ..., iL+L-1\}$ where $L$ is the REG bundle size, $i = 0,1,...,N_{REG}^{CORESET}/L - 1$, and $N_{REG}^{CORESET} = N_{RB}^{CORESET} N_{symb}^{CORESET}$ is the number of REGs in the CORESET
- CCE $j$ consists of REG bundles $\{f(6j/L), f(6jL+1), ..., f(6j/L+6/L-1)\}$ where $f(\cdot)$ is an interleaver

For non-interleaved CCE-to-REG mapping, L = 6 and $f(x) = x$.

For interleaved CCE-to-REG mapping, $L \in \{2,6\}$ for $N_{symb}^{CORESET} = 1$ and $L \in \{N_{symb}^{CORESET}, 6\}$ for $N_{symb}^{CORESET} \in \{2,3\}$. The interleaver is defined by

$$f(x) = (rC + c + n_{shift}) \bmod (N_{REG}^{CORESET}/L)$$
$$x = cR + r$$
$$r = 0,1, \ldots, R-1$$
$$c = 0,1, \ldots, C-1$$
$$C = N_{REG}^{CORESET}/(LR)$$

where $R \in \{2,3,6\}$.

The base station may inform the UE of configuration information, such as information on symbols to which the PDCCH is mapped within a slot and a transmission periodicity, via signaling.

A search space of the PDCCH is described as follows. The number of CCEs required to transmit the PDCCH may be 1, 2, 4, 8, or 16 depending on an aggregation level (AL), and different numbers of CCEs may be used for link adaptation of a downlink control channel. For example, when AL=L, one downlink control channel may be transmitted through L CCEs. The UE performs blind decoding to detect a signal without knowing information about the downlink control channel, and for this purpose, a search space representing a set of CCEs may be defined. The search space is a set of downlink control channel candidates consisting of CCEs for which the UE should attempt decoding at a given aggregation level. Since there are various aggregation levels that form one bundle with 1, 2, 4, 8, or 16 CCEs, the UE may have a plurality of

search spaces. A search space set may be defined as a set of search spaces at all configured aggregation levels.

The search spaces may be classified into a common search space (CSS) and a UE-specific search space (USS). A certain group of UEs or all UEs may monitor the CSS of the PDCCH to receive cell-common control information, such as a paging message or dynamic scheduling for a system information block (SIB). For example, the UE may receive scheduling assignment information of the PDSCH for receiving system information by monitoring the CSS of the PDCCH. In the case of the CSS, since a certain group of UEs or all UEs must receive the PDCCH, it may be defined as a predefined set of CCEs. The scheduling assignment information for a UE-specific PDSCH or PUSCH may be received by the UE by monitoring the USS of the PDCCH. The USS may be defined in a UE-specific manner as a function of a UE identity (ID) and various system parameters.

The base station may configure configuration information for the search space of the PDCCH for the UE via higher layer signaling (e.g., SIB, MIB, or RRC signaling). For example, the base station may configure, for the UE, the number of PDCCH candidates at each aggregation level L, a monitoring periodicity for the search space, a monitoring occasion in units of symbols within a slot for the search space, a search space type (CSS or USS), a combination of a DCI format and a radio network temporary identifier (RNTI) to be monitored in the corresponding search space, a CORESET index for which the search space is to be monitored, and the like. For example, parameters for the search space of the PDCCH may include information such as Table 8 below.

[Table 8]

```
SearchSpace ::=            SEQUENCE {
    searchSpaceId              SearchSpaceId,
```

```
    (Search space identity)
  controlResourceSetId      ControlResourceSetId        OPTIONAL,  --
Cond SetupOnly
    (CORESET identity)
  monitoringSlotPeriodicityAndOffset      CHOICE {
    (Monitoring slot level periodicity and offset)
      sl1                 NULL,
      sl2                 INTEGER (0..1),
      sl4                 INTEGER (0..3),
      sl5                 INTEGER (0..4),
      sl8                 INTEGER (0..7),
      sl10                INTEGER (0..9),
      sl16                INTEGER (0..15),
      sl20                INTEGER (0..19)
      sl40                INTEGER (0..39),
      sl80                INTEGER (0..79),
      sl160               INTEGER (0..159),
      sl320               INTEGER (0..319),
      sl640               INTEGER (0..639),
      sl1280              INTEGER (0..1279),
      sl2560              INTEGER (0..2559)
  }                                          OPTIONAL,    -- Cond
Setup
  duration                    INTEGER  (0..2559)     OPTIONAL,     --
Need R
    (Monitoring duration)
  monitoringSymbolsWithinSlot       BIT STRING (SIZE (14))
OPTIONAL,
-- Cond Setup
    (Monitoring symbol location within slot)
  nrofCandidates              SEQUENCE {
    (Number of PDCCH candidates per aggregation level)
```

```
      aggregationLevel1      ENUMERATED {n0, n1, n2, n3, n4, n5, n6, n8},
      aggregationLevel2      ENUMERATED {n0, n1, n2, n3, n4, n5, n6, n8},
      aggregationLevel4      ENUMERATED {n0, n1, n2, n3, n4, n5, n6, n8},
      aggregationLevel8      ENUMERATED {n0, n1, n2, n3, n4, n5, n6, n8},
      aggregationLevel16     ENUMERATED {n0, n1, n2, n3, n4, n5, n6, n8}
   }                                            OPTIONAL,     -- Cond
Setup
   searchSpaceType            CHOICE {
    (Search space type)
 common                                     SEQUENCE {
```

```
        (Common search space)
        dci-Format0-0-AndFormat1-0       SEQUENCE {
            ...
        }                                   OPTIONAL,     -- Need R
        dci-Format2-0              SEQUENCE {
          nrofCandidates-SF1        SEQUENCE {
            aggregationLevel1        ENUMERATED {n1, n2}   OPTIONAL,
-- Need R
            aggregationLevel2        ENUMERATED {n1, n2}   OPTIONAL,
-- Need R
            aggregationLevel4        ENUMERATED {n1, n2}   OPTIONAL,
-- Need R
            aggregationLevel8        ENUMERATED {n1, n2}   OPTIONAL,
-- Need R
            aggregationLevel16       ENUMERATED {n1, n2}   OPTIONAL,
-- Need R
          },
          ...
        }                                   OPTIONAL,     -- Need R
        dci-Format2-1              SEQUENCE {
            ...
```

```
            }                                          OPTIONAL,     -- Need R
            dci-Format2-2           SEQUENCE {
              …
            }                                          OPTIONAL,     -- Need R
            dci-Format2-3           SEQUENCE {
              dummy1                  ENUMERATED {sl1, sl2, sl4, sl5, sl8, sl10,
sl16, sl20}    OPTIONAL,     -- Cond Setup
              dummy2                  ENUMERATED {n1, n2},
              …
            }                                          OPTIONAL,     -- Need R
      },
      ue-Specific                   SEQUENCE {
          (UE-specific search space)
        dci-Formats                    ENUMERATED      {formats0-0-And-1-0,
formats0-1-And-1-1},
        ...
      }
    }                                          OPTIONAL     -- Cond Setup2
}
```

Based on the configuration information transmitted to the UE, the base station may configure one or a plurality of search space sets for the UE. According to an embodiment, the base station may configure a search space set 1 and a search space set 2 for the UE. In the search space set 1, the UE may be configured to monitor DCI format A scrambled by X-RNTI in the common search space (CSS), and in the search space set 2, the UE may be configured to monitor DCI format B scrambled by Y-RNTI in the UE-specific search space (USS).

According to the configuration information transmitted by the base station, one or a plurality of search space sets may exist in the CSS or the USS. For example, search space set #1 and search space set #2 may be configured as the CSS, and search space set #3 and search space set #4 may be configured as the USS.

In the CSS, the UE may monitor the following combinations of a DCI format and an RNTI. According to various embodiments of the disclosure, it is certainly not limited to the examples below.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the USS, the UE may monitor the following combinations of a DCI format and an RNTI. According to various embodiments of the disclosure, it is certainly not limited to the examples below.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The above RNTIs may follow the definitions and usages below. According to various embodiments of the disclosure, it is certainly not limited to the examples below.

- Cell RNTI (C-RNTI): For scheduling a UE-specific PDSCH or PUSCH
- Temporary Cell RNTI (TC-RNTI): For scheduling a UE-specific PDSCH
- Configured Scheduling RNTI (CS-RNTI): For scheduling a semi-statically configured UE-specific PDSCH
- Random Access RNTI (RA-RNTI): For scheduling a PDSCH during a random access procedure
- Paging RNTI (P-RNTI): For scheduling a PDSCH through which paging is transmitted
- System Information RNTI (SI-RNTI): For scheduling a PDSCH through which system information is transmitted
- Interruption RNTI (INT-RNTI): For indicating whether puncturing is performed on a PDSCH
- Transmit Power Control for PUSCH RNTI (TPC-PUSCH-RNTI): For indicating a power control command for a PUSCH
- Transmit Power Control for PUCCH RNTI (TPC-PUCCH-RNTI): For indicating a power control command for a PUCCH
- Transmit Power Control for SRS RNTI (TPC-SRS-RNTI): For indicating a power control command for an SRS

The above-described DCI formats may follow the definition as in Table 9 below.

[Table 9]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2 2 | Transmission of TPC commands for PUCCH and PUSCH |
| 2_3 | Transmission of a group of TPC commands for SRS transmissions by one or more UEs |

The search space of an aggregation level *L* in a CORESET *p* and a search space set *s* may be expressed by Equation 1 below.

[Equation 1]

$$L \cdot \left\{ \left( Y_{p,n^{\mu}_{s,f}} + \left\lfloor \frac{m_{s,n_{CI}} \cdot N_{CCE,p}}{L \cdot M^{(L)}_{s,max}} \right\rfloor + n_{CI} \right) mod \left\lfloor \frac{N_{CCE,p}}{L} \right\rfloor \right\} + i$$

- $L$: Aggregation level
- $n_{CI}$: Carrier index
- $N_{CCE,p}$: Total number of CCEs existing in the CORESET $p$
- - $n^{\mu}_{s,f}$: Slot index
- $M^{(L)}_{s,max}$: Number of PDCCH candidates of aggregation level $L$
- $m_{s,nCI}=0, ..., M^{(L)}_{s,max}-1$: PDCCH candidate group index of aggregation level L
- $i=0, ..., L-1$
- $Y_{p,n^{\mu}_{s,f}} = \left(A_p \cdot Y_{p,n^{\mu}_{s,f}-1}\right) mod\ D$ , $Y_{p,-1} = n_{RNTI} \neq 0$ , $A_p = 39827$ *for pmod*3 = 0 , $A_p = 39829$ *for pmod*3 = 1, $A_p$ = 39839 *for pmod*3 = 2, $D$ = 65537
- $n_{RATI}$: UE identifier

The $Y_{p,n_{s,f}^{\mu}}$ value may correspond to zero in the case of CSS.

In the case of USS, the $Y_{p,n_{s,f}^{\mu}}$ value may correspond to a value that varies depending on a UE identity (C-RNTI or ID configured by the base station to the UE) and a time index.

Next, a beam failure recovery (BFR) operation within a primary cell (PCell) will be described in detail. In order to enable smooth downlink transmission between the base station and the UE, the UE should be able to normally receive a PDCCH transmitted by the base station. If the UE cannot normally receive the PDCCH, it may be considered that a beam failure has occurred between the base station and the UE. Criteria and methods for determining whether the UE can normally receive the PDCCH will be described later. The NR system supports a BFR procedure to ensure smooth downlink transmission by coping with a dynamic beam failure between the base station and the UE.

The BFR procedure in the NR system can be largely classified into the following four processes:

- Beam failure detection process;
- New candidate beam identification process;
- Beam failure recovery request process; and
- gNB response reception process.

The first process is a process of detecting a beam failure, which will be described later as a beam failure detection (BFD) process. In the BFD process, the UE determines whether it can normally receive a PDCCH, and if it is determined that the UE cannot normally receive the PDCCH, the UE reports the beam failure to a higher layer. The higher layer of the UE detects the beam failure based on the report and may decide whether to perform the next process of the BFR.

A criterion for determining whether the UE can normally receive the PDCCH is a hypothetical PDCCH reception block error rate (BLER), which may be determined by comparing it with a predefined threshold. To calculate the hypothetical PDCCH reception BLER of the UE, a set of reference signals (RSs) for the BFD is required, which will be described later as a BFD RS set.

The BFD RS set may include up to two RSs, and the corresponding RS may be a periodic CSI-RS transmitted through a single port or a synchronization signal/physical broadcast channel block (SS/PBCH block, SSB). The BFD RS set may be configured via higher layer signaling from the base station. If the BFD RS set is not configured via higher layer signaling, some or all of RSs referenced in an activated TCI state of CORESET(s) configured for PDCCH monitoring of the UE may be included in the BFD RS set. If there are two or more RSs referenced in the TCI state, an RS referenced for 'QCL-typeD', which includes beam information, may be included in the BFD RS set. Among the RSs included in the BFD RS set, the UE may calculate the hypothetical PDCCH reception BLER based only on the RS referenced in the activated TCI state of the CORESET(s) configured for PDCCH monitoring. The UE may calculate the hypothetical PDCCH reception BLER with reference to Table 10 below.

[Table 10]

| Attribute | Value for BLER |
|---|---|
| DCI format | 1-0 |
| Number of control OFDM symbols | Same as the number of symbols of CORESET QCLed with respective CSI-RS for BFD |
| Aggregation level (CCE) | 8 |
| Ratio of hypothetical PDCCH RE energy to average CSI-RS RE energy | 0dB |
| Ratio of hypothetical PDCCH DMRS energy to average CSI-RS RE energy | 0dB |
| Bandwidth (MHz) | Same as the number of PRBs of CORESET QCLed with respective CSI-RS for BFD |
| Sub-carrier spacing (kHz) | Same as the SCS of CORESET QCLed with respective CSI-RS for BFD |
| DMRS precoder granularity | REG bundle size |
| REG bundle size | 6 |

(continued)

| Attribute | Value for BLER |
|---|---|
| CP length | Same as the CP length of CORESET QCLed with respective CSI-RS for BFD |
| Mapping from REG to CCE | Distributed |

Table 10 provides configurations for a hypothetical PDCCH referenced by the UE when calculating the hypothetical PDCCH reception BLER. Referring to Table 10, the UE may calculate the reception BLER of the hypothetical PDCCH by assuming the number of OFDM symbols, a bandwidth, a subcarrier spacing, and a cyclic prefix (CP) length of CORESET(s) in which a TCI state referencing an RS included in the BFD RS set is activated.

The UE calculates the hypothetical PDCCH reception BLER for all CORESETs in which a TCI state referencing an RS included in the BFD RS set is activated. If the hypothetical PDCCH reception BLER values for all BFD-RSs exceed a configured threshold, the UE reports a beam failure indication to a higher layer. Upon receiving the beam failure indication report, the higher layer of the UE increases a beam failure instance count. When the count value reaches a configured maximum value, the higher layer may decide whether to perform the next process of the BFR, and may refer to the following parameters configured for the higher layer operation process.

* beamFailureInstanceMaxCount: The maximum number of beam failure indication reports from a lower layer of the UE required to perform the next process of the BFR
* beamFailureDetectionTimer: A timer configuration for initializing the number of beam failure reports of the UE

The second process of the BFR procedure in the NR system is a process of searching for a new beam with good channel conditions, which will be described later as a new candidate beam identification process. When the higher layer of the UE detects a beam failure and decides to proceed with the process of searching for a new beam, the higher layer of the UE may request the physical layer of the UE to report information on a new candidate beam, such as rReference signal received power (L1-RSRP). To enable the UE to calculate information on the new candidate beam, the base station may configure a candidate beam RS set for the UE via higher layer signaling. The candidate beam RS set may include up to 16 RSs, and the corresponding RS may be a periodic CSI-RS or an SSB. When the higher layer of the UE requests the UE to report information on the new candidate beam, the UE reports the index information and the L1-RSRP measurement value of an RS, among the RSs included in the candidate beam RS set, that has an L1-RSRP value greater than an RSRP threshold configured via higher layer signaling. If the corresponding RS is a CSI-RS, the UE may consider a value obtained by applying powerControlOffsetSS (a higher layer signaling parameter) to the received power of the CSI-RS as the final L1-RSRP measurement value and compare it with the RSRP threshold. The higher layer of the UE may obtain information on a new beam with good channel conditions through the report on the candidate beam RS from the physical layer of the UE.

In a non-DRX mode, if the radio link conditions for all BFD RSs are lower than the RSRP threshold, the physical layer of the UE may indicate BFD information to the higher layer of the UE. The periodicity of the BFD information indication may be determined as the shorter of 2 ms and the shortest transmission periodicity among SSBs or periodic CSI-RSs transmitted in a PCell or a PSCell. In a DRX mode, the physical layer of the UE may perform the indication of the BFD information to the higher layer of the UE according to a periodicity defined in the TS 38.133 standard.

If the higher layer of the UE obtains information on new beams with good channel conditions exceeding the RSRP threshold from the physical layer of the UE, the higher layer of the UE selects one of the new beams with good channel conditions exceeding the RSRP threshold and informs the physical layer of the selection, and the UE transmits a request signal for BFR to the base station. This corresponds to the third process of the BFR procedure, which will be described later as a BFR request process. The higher layer of the UE selects a new RS to be referenced by the UE for the BFR request from the candidate beam RS set based on the information on the new beams and informs the physical layer of the selection. The UE may obtain configuration information for a physical random access channel (PRACH) transmission to send the BFR request through a new RS information for the BFR request and BFR request resource information configured via higher layer signaling. As an example, the base station and the UE may exchange higher layer signaling information as shown in Table 11 below to deliver the configuration information for the PRACH transmission to send the BFR request.

[Table 11]

| BeamFailureRecoveryConfig information element |
|---|

```
-- ASN1START
-- TAG-BEAMFAILURERECOVERYCONFIG-START

BeamFailureRecoveryConfig ::=      SEQUENCE {
   rootSequenceIndex-BFR            INTEGER (0..137)                        OPTIONAL, -- Need
M
   rach-ConfigBFR               RACH-ConfigGeneric                         OPTIONAL, -- Need M
   rsrp-ThresholdSSB             RSRP-Range                              OPTIONAL, -- Need M
   candidateBeamRSList            SEQUENCE (SIZE(1..maxNrofCandidateBeams)) OF PRACH-
ResourceDedicatedBFR  OPTIONAL, -- Need M
   ssb-perRACH-Occasion            ENUMERATED {oneEighth, oneFourth, oneHalf, one, two,
                              four, eight, sixteen}                 OPTIONAL, -- Need M
   ra-ssb-OccasionMaskIndex         INTEGER (0..15)                         OPTIONAL, -- Need
M
   recoverySearchSpaceId           SearchSpaceId                           OPTIONAL, -- Need R
   ra-Prioritization             RA-Prioritization                       OPTIONAL, -- Need R
   beamFailureRecoveryTimer         ENUMERATED {ms10, ms20, ms40, ms60, ms80, ms100, ms150, ms200}
OPTIONAL, -- Need M
   ...,
   [[
   msg1-SubcarrierSpacing-v1530       SubcarrierSpacing                         OPTIONAL  -- Need
M
   ]]
}

PRACH-ResourceDedicatedBFR ::=     CHOICE {
   ssb                    BFR-SSB-Resource,
   csi-RS                   BFR-CSIRS-Resource
}

BFR-SSB-Resource ::=             SEQUENCE {
   ssb                    SSB-Index,
   ra-PreambleIndex              INTEGER (0..63),
   ...
}

BFR-CSIRS-Resource ::=           SEQUENCE {
   csi-RS                   NZP-CSI-RS-ResourceId,
   ra-OccasionList              SEQUENCE (SIZE(1..maxRA-OccasionsPerCSIRS)) OF INTEGER (0..maxRA-
Occasions-1)  OPTIONAL,   -- Need R
   ra-PreambleIndex              INTEGER (0..63)                         OPTIONAL,   -- Need
R
   ...
}

-- TAG-BEAMFAILURERECOVERYCONFIG-STOP
-- ASN1STOP
```

The higher layer signaling information, BeamFailureRecoveryConfig, includes information on the PRACH transmission for sending the BFR request. The information included in BeamFailureRecoveryConfig may have the following meanings. That is, BeamFailureRecoveryConfig may include the following information.

- rootSequenceIndex-BFR: A root sequence index of a sequence used for the PRACH transmission.
- rach-ConfigBFR: Among parameters for the PRACH transmission, this includes a PRACH configuration index, the number of frequency resources, a starting point of the frequency resources, a response monitoring window, and a parameter for adjusting PRACH transmission power
- rsrp-ThresholdSSB: An RSRP threshold for selecting a new beam among the RSs included in the candidate beam RS set
- candidateBeamRSList: A candidate beam RS set
- ssb-perRACH-Occasion: The number of SSBs associated with a random access channel (RACH) transmission occasion
- ra-ssb-OccasionMaskIndex: A PRACH mask index for selecting a random access resource of the UE
- recoverySearchSpaceId: A search space index for receiving a PDCCH used for transmitting a random access response (RAR) signal from the base station in response to the BFR request
- ra-Prioritization: A set of parameters used for a prioritized random access procedure
- beamFailureRecoveryTimer: A timer for initializing the configuration of the PRACH resources for sending the BFR request

- msg1-SubcarrierSpacing-v1530: A subcarrier spacing of the PRACH transmission for sending the BFR request

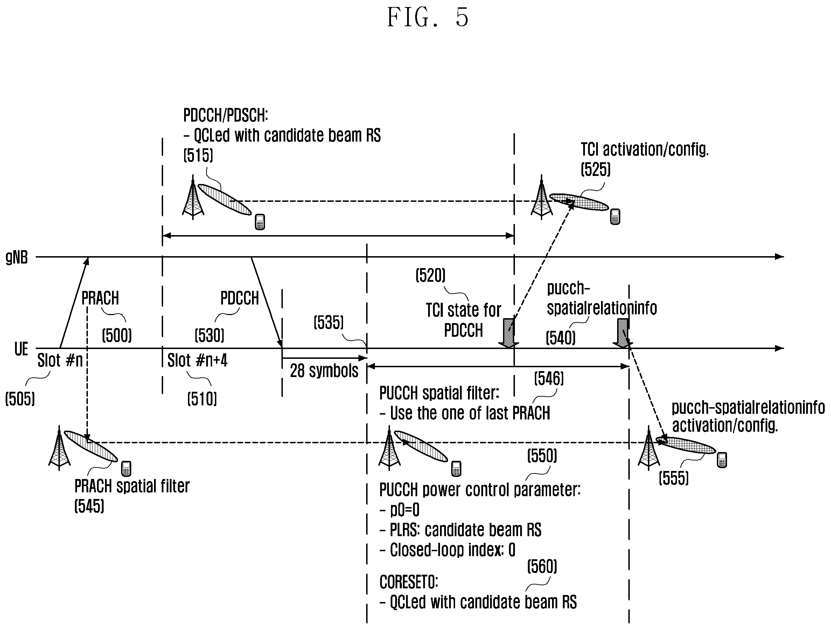

The UE may transmit a BFR request signal to the base station by referring to the configuration information for the PRACH transmission to send the BFR request. As shown in Table 11, the UE may be configured with PRACH resources associated with each candidate beam RS through PRACH-ResourceDedicatedBFR, which is a higher layer signaling.
The fourth process of the BFR procedure in the NR system is a process in which the base station, having received the BFR request signal from the UE, transmits a response signal to the UE, which will be described later as a gNB response process. This process can be described with reference to FIG. 5.
FIG. 5 is a diagram illustrating a response process of a base station to a BFR request signal of a UE during a PCell BFR operation according to an embodiment of the disclosure.
To respond to the BFRQ signal from the UE, the base station may transmit a PDCCH using resources of a search space configured for the UE via higher layer signaling. Among configuration parameters configured for the UE, based on higher layer signaling, for the BFRQ and the response process of the base station, the aforesaid signaling information, BeamFailureRecoveryConfig, includes recoverySearchSpaceId, which is a search space index for receiving a PDCCH used for transmitting a random access response signal from the base station in response to the BFR request. If a PRACH transmission (500) associated with a candidate beam RS selected by the UE is performed in the n-th slot (505), the UE may monitor a PDCCH including a CRC scrambled with C-RNTI or MCS-C-RNTI in a search space having the recoverySearchSpaceId starting from the (n+4)-th slot (510). When monitoring the PDCCH and receiving a PDSCH scheduled through the corresponding PDCCH in the search space having the recoverySearchSpaceId, the UE may assume that DMRSs of the corresponding PDCCH and PDSCH have the same quasi-co-location (QCL) parameters as the candidate beam RS corresponding to the PRACH transmitted by the UE (515). That is, when receiving the corresponding PDCCH and PDSCH, the UE may assume channel parameters used when receiving the candidate beam RS corresponding to the PRACH transmitted by the UE. Until the UE receives an activation for a TCI state from a higher layer of the UE, or receives tci-StatesPDCCH-ToAddList, tci-StatesPDCCH-ToReleaseList, or both, which are higher layer signalings (520), the UE may apply the assumption of having the same channel parameters as the reception of the candidate beam RS when receiving the PDCCH and PDSCH. After receiving the activation for the TCI state from the higher layer, or receiving the tci-StatesPDCCH-ToAddList, tci-StatesPDCCH-ToReleaseList, or both, the UE may use the changed TCI state when receiving the PDCCH (525). After the UE receives the PDCCH including the CRC scrambled with C-RNTI or MCS-C-RNTI in the search space having the recoverySearchSpaceId, the UE may perform monitoring for PDCCH candidates in the search space having the recoverySearchSpaceId until receiving a MAC-CE for TCI state activation or receiving the higher layer signaling tci-StatesPDCCH-ToAddList or tci-StatesPDCCH-ToReleaseList.
In a PCell or a PSCell, after 28 symbols (535) from the last symbol of the first PDCCH reception (530) including a CRC scrambled with C-RNTI or MCS-C-RNTI in a search space having the recoverySearchSpaceId, and until the UE receives a MAC-CE for PUCCH-SpatialRelationInfo activation or receives PUCCH-SpatialRelationInfo, which is a higher layer signaling, for a specific PUCCH resource (540): when transmitting a PUCCH in the same cell, the UE may use the same spatial filter (545, 546) as the most recently transmitted PRACH, use index 0 as p0 for a power control parameter, use the candidate beam RS used in the BFRQ as a pathloss reference signal, and use 0 as a power control closed-loop index (550). After receiving the MAC-CE for PUCCH-SpatialRelationInfo activation or the higher layer signaling PUCCH-SpatialRelationInfo for a specific PUCCH resource, the UE may use a spatial filter and power control parameters based on the changed PUCCH-SpatialRelationInfo when transmitting a PUCCH (555).
In a PCell or a PSCell, after 28 symbols (535) from the last symbol of the first PDCCH reception including a CRC scrambled with C-RNTI or MCS-C-RNTI in a search space having the recoverySearchSpaceId, the UE may apply an assumption of having the same QCL parameters as the reception of the candidate beam RS when monitoring a PDCCH in CORESET 0 (560).
If the UE is configured with TCI-State_r17 (a higher layer signaling indicating that the UE operates in a unified TCI mode) in a PCell or a PSCell, and after 28 symbols from the last symbol of the first PDCCH reception including a CRC scrambled with C-RNTI or MCS-C-RNTI in a search space having the recoverySearchSpaceId, the UE may perform the following operations.

- If the UE is not configured with SSB-MTC-AdditionalPCI (a higher layer signaling), the UE may apply an assumption of having the same QCL parameters as the reception of the candidate beam RS when monitoring all CORESETs, receiving a PDSCH, and receiving an aperiodic CSI-RS resource. In this case, the aperiodic CSI-RS resource may be included in a CSI-RS resource set that can be received with the same TCI state as the PDCCH and PDSCH, as a dynamically indicated unified TCI state can be applied.
- When transmitting a PUSCH, PUCCH, and SRS, the UE may use the same spatial domain filter as used for the most recently transmitted PRACH. In this case, the SRS may be transmitted with the same spatial domain filter as the PUSCH and PUCCH, as a dynamically indicated unified TCI state can be applied. Power control parameters for the PUSCH, PUCCH, and SRS transmission of the UE may follow the following.

■ A pathloss reference signal may follow the candidate beam RS, and a downlink pathloss value may be measured using it.
■ As power control parameters for the PUSCH transmission, p0, alpha, and a PUSCH power control adjustment state included in p0-Alpha-CLID-PUSCH-Set associated with the lowest ul-powercontrolId in the PCell or PSCell may be used.
■ As power control parameters for the PUCCH transmission, p0, alpha, and a PUCCH power control adjustment state included in p0-Alpha-CLID-PUCCH-Set associated with the lowest ul-powercontrolId in the PCell or PSCell may be used.
■ As power control parameters for the SRS transmission, p0, alpha, and an SRS power control adjustment state included in p0-Alpha-CLID-SRS-Set associated with the lowest ul-powercontrolId in the PCell or PSCell may be used.

Next, the beam failure recovery (BFR) operation in a secondary cell (SCell) will be described in detail. If the base station and the UE reuse the predefined BFR operation of a PCell for an SCell BFR operation, there may be additional considerations as follows:

- [SCell Consideration 1]: When one or more SCells are DL-only cells
- [SCell Consideration 2]: When one or more SCells do not include a CORESET, a search space, or both
- [SCell Consideration 3]: When a plurality of SCells exist, and a beam failure occurs in one or more of those SCells

In the case of SCell Consideration 1, if the UE reuses the PCell BFR and a beam failure occurs in a specific SCell, the UE may not be able to perform a PRACH transmission for sending a beam failure recovery request (BFRQ) in that SCell. Therefore, a method for reporting the beam failure status of the corresponding SCell to the base station in another cell capable of uplink transmission may be required.
In the case of SCell Consideration 2, if the UE reuses the PCell BFR and a beam failure occurs in a specific SCell, the UE cannot receive a response from the base station through a recovery search space in that SCell. Thus, a method for receiving the response from the base station in another cell where a CORESET and a search space exist may be required.
In the case of SCell Consideration 3, if the UE reuses the PCell BFR and a beam failure occurs in at least one or more specific SCells, the UE may need to perform a PRACH transmission for each SCell. This may impose a heavy signaling overhead burden on the UE, and if a large number of SCells experience beam failure, a long latency may occur when the UE transmits the BFRQ to the base station. Therefore, a method considering signaling overhead for BFRQs of a plurality of SCells may be required.
Taking these considerations into account, NR Release 16 defined the BFR operation for SCells. The difference from the existing PCell BFR may lie in the BFRQ process and the corresponding base station response process. A BFD RS set may be configured in a downlink bandwidth part (BWP) of each SCell via higher layer signaling; if not configured, some or all of the RSs referenced in an activated TCI state of CORESET(s) configured for PDCCH monitoring of the UE within the corresponding downlink BWP may be included in the BFD RS set. A candidate beam RS set may be configured within BeamFailureRecoverySCellConfig, which is a higher layer signaling, in the downlink BWP of each SCell. The UE may be configured with schedulingRequestID-BFR-SCell from the base station via higher layer signaling, which may be higher layer signaling configuration information for a PUCCH transmission for a link recovery request (LRR).

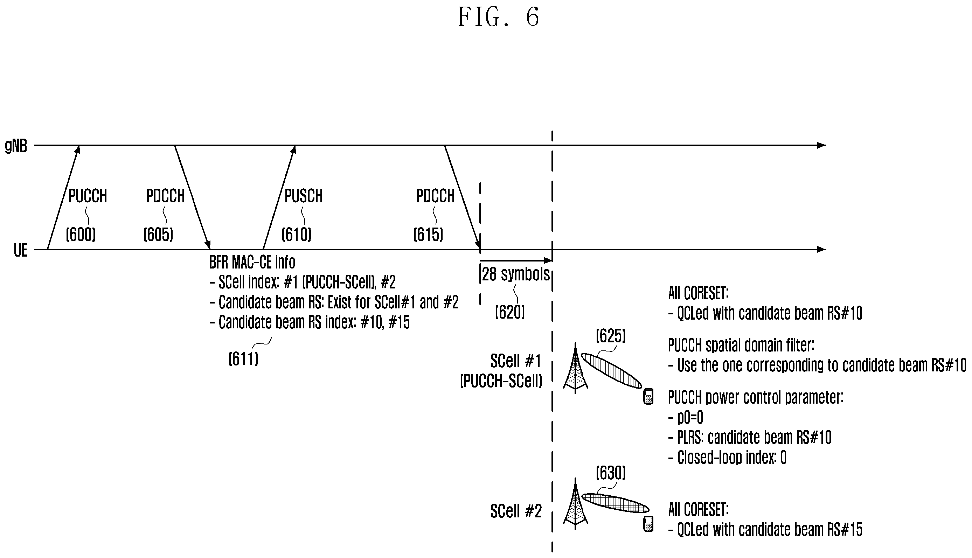

FIG. 6 is a diagram illustrating a response process of a base station to a BFR request signal of a UE during a SCell BFR operation according to an embodiment of the disclosure.
The UE may transmit a PUCCH resource having a schedulingRequestID-BFR-SCell value to the base station as a scheduling request signal (600). In response to the scheduling request PUCCH, the UE may receive a first PDCCH from the base station (605) and receive first PUSCH scheduling information through the first PDCCH. Based on the scheduling information, the UE may transmit a first PUSCH including a BFR MAC-CE (610). The BFR MAC-CE may include indices of SCells having a radio link quality lower than a reference value, whether a candidate beam RS exists for each of the SCells, and, if it exists, a candidate beam RS index identified in the corresponding SCell. For example, the BFR MAC-CE included in the first PUSCH may include indices 1 and 2 for SCells having a radio link quality lower than the reference value, candidate beam RS index 10 for the first SCell, and candidate beam RS index 15 for the second SCell (611). After transmitting the first PUSCH, the UE may receive a second PDCCH from the base station (615), where the second PDCCH has the same HARQ process ID field value as the first PDCCH and includes a toggled NDI field value. After 28 symbols (620) from the last symbol of the second PDCCH reception from the base station, the UE may perform the following operations. The subcarrier spacing (SCS) for the 28 symbols may be determined as the smallest SCS among an activated downlink BWP in which the PDCCH is received and an activated downlink BWP in at least one or more SCells.
**[0147]** - When monitoring a CORESET in one or more SCells whose indices are included in the BFR MAC-CE, if the candidate beam RS information for each SCell is included in the BFR MAC-CE, the UE may assume the same QCL parameters as the corresponding candidate beam RS. That is, when monitoring the CORESET in each SCell, the UE may assume channel parameters used when receiving the candidate beam RS for each SCell in the BFR MAC-CE.

- When transmitting a PUCCH in a PUCCH SCell, the UE may use a spatial domain filter corresponding to the candidate beam RS included in the BFR MAC-CE and reported to the base station for that SCell, use index 0 as p0 for a power control parameter, use the candidate beam RS as a pathloss reference signal, and use 0 as a power control closed-loop index. Conditions for this may be as follows.

  ■ The UE has been configured with or has received an activation for PUCCH-SpatialRelationInfo from the base station for the corresponding PUCCH.
  ■ The PUCCH for the LRR was not transmitted, or was transmitted in a PCell or a PSCell.
  ■ The PUCCH SCell index is included in the BFR MAC-CE.

For example, if the first SCell included in the BFR MAC-CE is a PUCCH-SCell, the UE may assume the same QCL parameters as candidate beam RS #10 when monitoring all CORESETs in the first SCell; and when transmitting a PUCCH in the first SCell, the UE may use a spatial domain filter corresponding to candidate beam RS #10, use index 0 as a power control parameter p0, use candidate beam RS #10 as a pathloss reference signal, and use 0 as a power control closed-loop index (625). Additionally, the UE may assume the same QCL parameters as candidate beam RS #15 when monitoring all CORESETs in the second SCell (630).
If the UE is configured with TCI-State_r17, dl-OrJoint-TCIStateList, or TCI-UL-State (higher layer signalings indicating that the UE operates in a unified TCI mode) in a PCell or a PSCell, after transmitting the first PUSCH including the BFR MAC-CE, the UE may receive the second PDCCH from the base station as described above. The second PDCCH may have the same HARQ process ID field value as the first PDCCH and include a toggled NDI field value. After 28 symbols from the last symbol of the second PDCCH reception from the base station, the UE may perform the following operations.

- The UE may apply an assumption of having the same QCL parameters as the reception of the candidate beam RS when monitoring all CORESETs, receiving a PDSCH, and receiving an aperiodic CSI-RS resource. In this case, the aperiodic CSI-RS resource may be included in a CSI-RS resource set that can be received with the same TCI state as the PDCCH and PDSCH, as a dynamically indicated unified TCI state can be applied.
- When transmitting a PUSCH, PUCCH, and SRS, the UE may use the spatial domain filter used when receiving the candidate beam RS. In this case, the SRS may be transmitted with the same spatial domain filter as the PUSCH and PUCCH, as a dynamically indicated unified TCI state can be applied. Power control parameters for the PUSCH, PUCCH, and SRS transmission of the UE may follow the following.

  ■ A pathloss reference signal may follow the candidate beam RS, and a downlink pathloss value may be measured using it.
  ■ As power control parameters for the PUSCH transmission, p0, alpha, and a PUSCH power control adjustment state included in p0-Alpha-CLID-PUSCH-Set associated with the lowest ul-powercontrolId in the corresponding SCell may be used.
  ■ As power control parameters for the PUCCH transmission, p0, alpha, and a PUCCH power control adjustment state included in p0-Alpha-CLID-PUCCH-Set associated with the lowest ul-powercontrolId in the corresponding SCell may be used.
  ■ As power control parameters for the SRS transmission, p0, alpha, and an SRS power control adjustment state included in p0-Alpha-CLID-SRS-Set associated with the lowest ul-powercontrolId in the corresponding SCell may be used.

In a PCell or a PSCell, if a BFR MAC-CE is transmitted through Msg3 or MsgA within a contention-based random access procedure, and the UE is configured with PUCCH-spatialrelationinfo (or receives its activation) from the base station for a certain PUCCH resource, the UE may transmit the corresponding PUCCH resource after 28 symbols from receiving a PDCCH as a completion step of the contention-based random access procedure.
If the UE is configured with TCI-State_r17, dl-OrJoint-TCIStateList, or TCI-UL-State (higher layer signalings indicating that the UE operates in a unified TCI mode) in a PCell or a PSCell, if the BFR MAC-CE is transmitted through Msg3 or MsgA within a contention-based random access procedure, and if the UE is configured with PUCCH-spatialrelationinfo (or receives its activation) from the base station for a certain PUCCH resource, the UE may perform the following operations after 28 symbols from receiving the PDCCH as the completion step of the contention-based random access procedure.

- If the UE is not configured with SSB-MTC-AdditionalPCI (a higher layer signaling), the UE may apply an assumption of having the same QCL parameters as the reception of the candidate beam RS when monitoring all CORESETs, receiving a PDSCH, and receiving an aperiodic CSI-RS resource. In this case, the aperiodic CSI-RS resource may be

included in a CSI-RS resource set that can be received with the same TCI state as the PDCCH and PDSCH, as a dynamically indicated unified TCI state can be applied.

- When transmitting a PUSCH, PUCCH, and SRS, the UE may use the same spatial domain filter as used for the most recently transmitted PRACH. In this case, the SRS may be transmitted with the same spatial domain filter as the PUSCH and PUCCH, as a dynamically indicated unified TCI state can be applied. Power control parameters for the PUSCH, PUCCH, and SRS transmission of the UE may follow the following.

■ A pathloss reference signal may follow the candidate beam RS, and a downlink pathloss value may be measured using it.
■ As power control parameters for the PUSCH transmission, p0, alpha, and a PUSCH power control adjustment state included in p0-Alpha-CLID-PUSCH-Set associated with the lowest ul-powercontrolId in the PCell or PSCell may be used.
■ As power control parameters for the PUCCH transmission, p0, alpha, and a PUCCH power control adjustment state included in p0-Alpha-CLID-PUCCH-Set associated with the lowest ul-powercontrolId in the PCell or PSCell may be used.
■ As power control parameters for the SRS transmission, p0, alpha, and an SRS power control adjustment state included in p0-Alpha-CLID-SRS-Set associated with the lowest ul-powercontrolId in the PCell or PSCell may be used.

Next, a beam failure recovery (BFR) operation for each transmission and reception point (TRP) will be described in detail. In current NR systems, a BFD RS set may include up to two RSs, whereas up to three CORESETs configured for PDCCH monitoring of the UE may be configured per BWP. Furthermore, in Release 16 NR systems, the maximum number of CORESETs per BWP was increased to five for multiple PDCCH-based multi-TRP transmission, and Release 16 NR-U also discussed increasing the maximum number of CORESETs per BWP to support wideband operations. Therefore, if a beam failure indication to a higher layer is performed only when all hypothetical PDCCH reception BLER values calculated for all RSs in the BFD RS set exceed a threshold, as in the existing BFD operation, the latency for proceeding to the remaining BFR processes may increase. Moreover, it is impossible to detect a situation where only the BLER value for a specific RS in the BFD RS set exceeds the threshold. Accordingly, when the BFD RS set is not configured for the UE via higher layer signaling, the efficiency of the BFD process for determining whether smooth downlink transmission between the base station and the UE is possible can be improved, thereby enabling a low-latency BFR procedure, by the base station: configuring a beam failure indication to be performed using only a subset of RSs within a BFD RS set selected from RSs referenced in an active TCI state of the CORESET(s) configured for PDCCH monitoring; configuring a plurality of BFD RS sets for the UE via higher layer signaling, or indicating the UE to arbitrarily select among a plurality of BFD RS sets.

Furthermore, since the current BFR procedure in NR systems was designed without considering operations such as multi-TRP/panel of the base station, the BFR procedure can be performed more efficiently by utilizing individual links between the multi-TRP/panel of the base station and the UE, rather than following the existing BFR procedure during the multi-TRP/panel operation. For example, if one RS in the BFD RS set is associated with a first TRP (TRP1) while the other RS is associated with a second TRP (TRP2), and if a link between the UE and TRP1 is good while a link between the UE and TRP2 is degraded, a situation may occur where the BFR operation cannot be performed because the hypothetical BLER for the RS associated with TRP1 is still calculated as good. In addition, if a link between the UE and a TRP or panel that is not experiencing beam failure among the multi-TRP/panel connected to the UE is utilized, the BFR for the link between the UE and the TRP or panel experiencing beam failure can be recovered with low latency. The simplification of the BFR procedure considering multiple links of multi-TRP/panel in an embodiment of the disclosure is not limited to multi-TRP/panel but can be equally applied to a single-TRP/panel environment where a plurality of BFD RS sets are defined and BFR is performed for each BFD RS set.

Instead of one BFD RS set and one candidate beam RS set, the UE may be configured with two BFD RS sets and two candidate beam RS sets. A first BFD RS set is associated with a first candidate beam RS set, and a second BFD RS set is associated with a second candidate beam RS set. The UE may be configured with the first and second BFD RS sets through failureDetectionSet1 and failureDetectionSet2, which are higher layer signalings from the base station. If the UE is not configured with the first and second BFD RS sets through failureDetectionSet1 and failureDetectionSet2, the UE may include, in the first BFD RS set, some or all of the RSs referenced by an activated TCI state in one or more first CORESETs where a higher layer signaling coresetPoolIndex is set to 0 or is not configured. Additionally, the UE may include, in the second BFD RS set, some or all of the RSs referenced by an activated TCI state in one or more second CORESETs where the coresetPoolIndex is set to 1.

The UE may report, to the base station as UE capability information, the maximum number of RSs per BFD RS set and the maximum total number of RSs included in both BFD RS sets. Based on this UE capability information, when the UE is configured with the first and second BFD RS sets via higher layer signaling as described above (or, if not configured, the UE configures them using some or all of the RSs referenced by activated TCI states in the first and second CORESETs), the UE may expect the number of RSs per BFD RS set and the total number of RSs in both BFD RS sets to be less than or

equal to the UE capability values reported to the base station. If the UE is not configured with the first and second BFD RS sets through higher layer signalings failureDetectionSet1 and failureDetectionSet2, and the total number of RSs referenced by the activated TCI states in the first and second CORESETs exceeds the maximum total number of RSs included in both BFD RS sets reported as the UE capability, the UE may select RSs starting from those referenced by the activated TCI state in a CORESET associated with a search space having a shorter periodicity among a plurality of first and second CORESETs. If search spaces associated with the plurality of first and second CORESETs have the same periodicity, the UE may select RSs starting from those referenced by the activated TCI state in a CORESET with a higher index.

If the UE:

- includes one or more first CORESETs in which a higher layer signaling coresetPoolIndex is not configured or a coresetPoolIndex value is set to 0 within an activated downlink BWP of a serving cell;
- includes one or more second CORESETs in which a higher layer signaling coresetPoolIndex value is set to 1 within the same activated downlink BWP of the same serving cell; and
- is configured with a higher layer signaling SSB-MTCAdditionalPCI,
  the UE may include an SSB index associated with a physical cell ID (PCI) different from a physCellId value in ServingCellConfigCommon into a first or second candidate beam RS set, and may consider a first or second BFD RS set associated therewith to also be associated with the same physical cell ID. For example, if the physCellId value in ServingCellConfigCommon is 0 and a specific SSB is associated with a physical cell ID value of 1, the UE may consider that the first BFD RS set and the first candidate beam RS set are associated with 0, which is the physical cell ID of the serving cell, and the second BFD RS set and the second candidate beam RS set are associated with 1, which is the physical cell ID with which the corresponding SSB is associated.

If a PCell and a PSCell are associated with the first BFD RS set, the first candidate beam RS set associated therewith, the second BFD RS set, and the second candidate beam RS set associated therewith, the UE may report to the base station, through a UE capability report twoLRR-Capability, that the number of LRRs that can be configured via higher layer signaling from the base station is two. A UE that has not reported this may receive configuration information for a first LRR from the base station through a higher layer signaling schedulingRequestID-BFR, and a UE that has reported this may additionally receive configuration information for a second LRR through a higher layer signaling schedulingRequestID-BFR2. If the UE receives only the configuration for the first LRR from the base station through higher layer signaling, the UE may perform PUCCH transmission for LRRs for the first and second BFD RS sets. If the UE receives the configurations for both the first and second LRRs from the base station through higher layer signaling, the UE may use the configuration information for the first LRR for the first BFD RS set and use the configuration information for the second LRR for the second BFD RS set.

If at least one serving cell is associated with the first BFD RS set, the first candidate beam RS set associated therewith, the second BFD RS set, and the second candidate beam RS set associated therewith, the UE may transmit a second PUSCH including an enhanced BFR MAC-CE to the base station. In this case, the enhanced BFR MAC-CE may include at least one or more of the following information.

- Cell index(es) corresponding to a single BFD RS set having a link quality lower than a reference value
- Presence or absence of a selected candidate beam RS exists in each single candidate beam RS set within the cell index(es) corresponding to the single BFD RS set, and if present, an index of the candidate beam RS
- Cell index(es) for which at least one of the first and second BFD RS sets has a link quality lower than the reference value

  ■ BFD RS set index(es) having a link quality lower than the reference value among the first and second BFD RS sets

- Presence or absence of a selected candidate beam RS exists in each of the first and second candidate beam RS sets within the cell index(es) corresponding to the first and second BFD RS sets, and if present, an index of the candidate beam RS for each set

For serving cell(s) associated with the first BFD RS set, the first candidate beam RS set associated therewith, the second BFD RS set, and the second candidate beam RS set associated therewith, the UE may perform the following operations after 28 symbols from the last symbol of a reception of a second-1 PDCCH, which includes the same HARQ process ID field and a toggled NDI field value as a first-1 PDCCH that scheduled the second PUSCH. In this case, a subcarrier spacing for the 28 symbols may be determined as the smallest subcarrier spacing among an activated downlink BWP in which the PDCCH is received and active downlink BWPs of the serving cells.

- When monitoring the first CORESET for which a higher layer signaling coresetPoolIndex is not configured or coresetPoolIndex is set to 0, the UE may follow a QCL parameter assumption of a candidate beam RS selected from the first candidate beam RS set.
- When monitoring the second CORESET for which a higher layer signaling coresetPoolIndex is set to 1, the UE may follow a QCL parameter assumption of a candidate beam RS selected from the second candidate beam RS set.

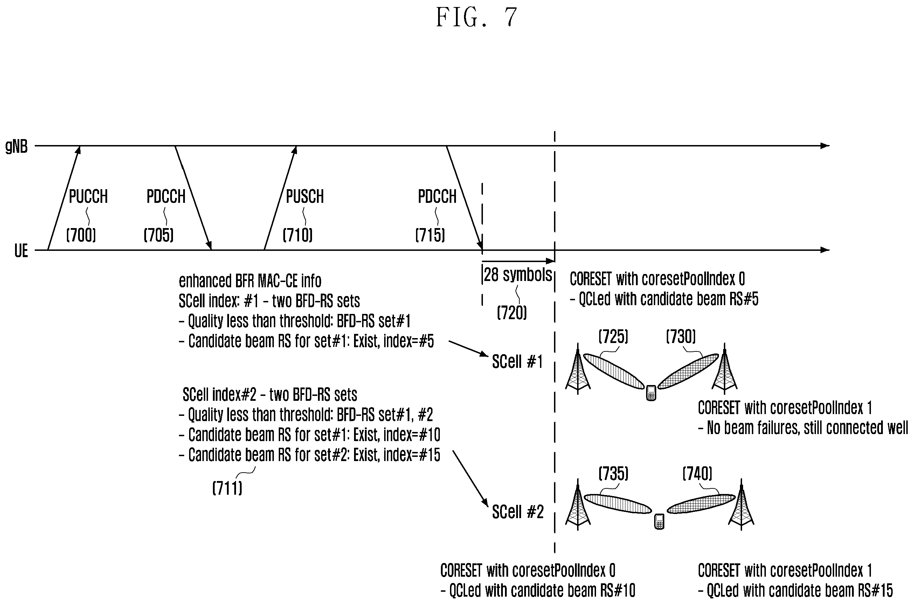

FIG. 7 is a diagram illustrating a response process of a base station to a BFR request signal of a UE during a BFR operation per TRP according to an embodiment of the disclosure.

The UE may receive one or two LRR configuration information according to the UE capability report and the higher layer signaling of the base station in response thereto, and may transmit a PUCCH for a selected LRR to the base station depending on which of the first and second BFD RS sets is in a beam failure situation and for which a BFRQ operation is performed (700). As a response of the base station thereto, the UE may receive a first-1 PDCCH including second PUSCH scheduling information from the base station (705). Based on the second PUSCH scheduling information, the UE may transmit a second PUSCH including an enhanced BFR MAC-CE to the base station (710), and as an example, the enhanced BFR MAC-CE may include the following information (711).

- Scell Index: #1, associated with a plurality of BFD RS sets

  ■ BFD RS set having a hypothetical BLER lower than a reference value: First BFD RS set in SCell#1
  ■ Within a first candidate beam RS set associated with the first BFD RS set in SCell#1, a candidate beam RS selected by the UE having a link quality higher than a reference value exists, and the index of the corresponding RS: #5

- Scell Index: #2, associated with a plurality of BFD RS sets

  ■ BFD RS set having a hypothetical BLER lower than a reference value: First and second BFD RS sets in SCell#2
  ■ Within a first candidate beam RS set associated with the first BFD RS set in SCell#2, a candidate beam RS selected by the UE having a link quality higher than a reference value exists, and the index of the corresponding RS: #10
  ■ Within a second candidate beam RS set associated with the second BFD RS set in SCell#2, a candidate beam RS selected by the UE having a link quality higher than a reference value exists, and the index of the corresponding RS: #15

After 28 symbols (720) from the last symbol of a reception of a second-1 PDCCH (715), which includes the same HARQ process ID field and a toggled NDI field value as the first-1 PDCCH that scheduled the second PUSCH, the UE may perform the following operations.

- In SCell #1,

  ■ When monitoring the first CORESET for which a higher layer signaling coresetPoolIndex is not configured or coresetPoolIndex is set to 0, the UE may follow a QCL parameter assumption of candidate beam RS #5 selected from the first candidate beam RS set (725).
  ■ When monitoring the second CORESET for which a higher layer signaling coresetPoolIndex is set to 1, since the second BFD RS set in the corresponding cell was not reported as a BFD RS set having a hypothetical BLER lower than a reference value through the enhanced BFR MAC-CE, it is determined not to be in a beam failure situation; accordingly, the UE may perform monitoring using a TCI state previously configured or activated for the second CORESET (730).

- In SCell #2,

  ■ When monitoring the first CORESET for which a higher layer signaling coresetPoolIndex is not configured or coresetPoolIndex is set to 0, the UE may follow a QCL parameter assumption of candidate beam RS #10 selected from the first candidate beam RS set (735).
  ■ When monitoring the second CORESET for which a higher layer signaling coresetPoolIndex is set to 1, the UE may follow a QCL parameter assumption of candidate beam RS #15 selected from the second candidate beam RS set (740).

Now, embodiments of the disclosure will be described in detail with reference to the accompanying drawings.

Hereinafter, a base station refers to an entity performing resource allocation of a terminal, and may be at least one of a gNode B (gNB), an eNode B (eNB), a Node B, a base station (BS), a radio access unit, a base station controller, or a node on a network. A terminal may include a user equipment (UE), a mobile station (MS), a cellular phone, a smart phone, a computer, or a multimedia system capable of performing a communication function. Hereinafter, embodiments of the disclosure will be described using a 5G system as an example, but the embodiments may also be applied to other communication systems having a similar technical background or channel type, such as an LTE or LTE-A mobile communication and mobile communication technologies developed after 5G. Accordingly, the embodiments of the disclosure may be applied to other communication systems through some modifications without significantly departing from the scope of the disclosure as will be apparent to a person skilled in the art. The contents of the disclosure can be applied to frequency division duplex (FDD), time division duplex (TDD), cross division duplex (XDD), and subband full duplex (SBFD) systems.

In describing the disclosure, detailed descriptions of related functions or components will be omitted if it is determined that they may unnecessarily obscure the subject matter of the disclosure. In addition, the terms described below are terms defined in consideration of functions in the disclosure, and may vary according to the intention of a user or an operator, or customs. Therefore, the definitions should be made based on the contents throughout this specification.

In describing the disclosure, higher layer signaling (or a higher signal, higher signaling) may refer to a signaling corresponding to at least one or a combination of the following signalings.

- MIB (Master Information Block)
- SIB (System Information Block) or SIB X (X=1, 2, ...)
- RRC (Radio Resource Control)
- MAC (Medium Access Control) CE (Control Element)

Furthermore, L1 signaling may refer to a signaling corresponding to at least one or a combination of signaling methods using the following physical layer channels or signaling.

- PDCCH (Physical Downlink Control Channel)
- DCI (Downlink Control Information)
- UE-specific DCI
- Group common DCI
- Common DCI
- Scheduling DCI (e.g., DCI used for the purpose of scheduling downlink or uplink data)
- Non-scheduling DCI (e.g., DCI not used for the purpose of scheduling downlink or uplink data)
- PUCCH (Physical Uplink Control Channel)
- UCI (Uplink Control Information)

Hereinafter, although the above examples are described through various embodiments in the disclosure, they are not independent, and more than one embodiment may be applied simultaneously or in combination.

In the description of an embodiment of the disclosure, an operation of a main radio may also be understood as an operation of a UE including the main radio and/or an operation of a processor included in the UE including the main radio.

In the description of an embodiment of the disclosure, an operation of a wake-up receiver may be understood as an operation of a UE including the wake-up receiver and/or an operation of a processor included in the UE including the wake-up receiver.

In the description of an embodiment of the disclosure, unless otherwise specified, the main radio and/or the wake-up receiver may be used for signal/channel transmission and reception of the UE.

In the description of an embodiment of the disclosure, turning "ON" may include both switching from an off-state to an on-state and maintaining the on-state.

In the description of an embodiment of the disclosure, turning "OFF" may include both switching from an on-state to an off-state and maintaining the off-state.

In the description of an embodiment of the disclosure, "less than" (or "smaller than a specific value", etc.) may be replaced by "less than or equal to", and vice versa.

In the description of an embodiment of the disclosure, "greater than" (or "larger than a specific value", etc.) may be replaced by "greater than or equal to", and vice versa.

In the description of an embodiment of the disclosure, "a/b" may mean at least one of a or b.

As wireless communication systems evolve, there is a demand for solutions to beam failure detection and recovery for a UE equipped with a wake-up receiver to alleviate the problem of excessive UE power consumption and to achieve high energy efficiency.

The disclosure is intended to resolve the problem of excessive UE power consumption and achieve high energy

efficiency in a wireless communication system. The disclosure defines UE operations required for beam failure detection and beam failure recovery in a case where a UE equipped with a wake-up receiver is configured to receive a wake-up signal through the wake-up receiver in an RRC_CONNECTED state.

As described above, in order to achieve ultra-high-speed data services reaching several Gbps in a 5G system, transmission and reception of ultra-wideband signals of tens to hundreds of MHz, or several GHz, may be supported. The transmission and reception of ultra-wideband signals may be supported through a single component carrier (CC) or through carrier aggregation (CA) technology that combines a plurality of component carriers. When a mobile communication operator cannot secure a frequency of a bandwidth sufficient to provide an ultra-high-speed data service as a single component carrier, the carrier aggregation technology can increase the total sum of frequency bandwidths by combining individual component carriers having relatively small bandwidth sizes, and as a result, enable ultra-high-speed data services.

The 5G system is designed and developed for all of various use cases. In addition to latency, reliability, and availability, the energy efficiency of a UE is very important in the 5G system. A 5G UE needs to be charged on a weekly or daily basis depending on an individual's usage time, and generally consumes tens of mW in an RRC_IDLE/RRC_INACTIVE state and hundreds of mW in an RRC_CONNECTED state. Designing to extend battery life may be an essential element not only for a better user experience but also for improving energy efficiency. Energy efficiency may be even more important for a UE without a continuous energy source (e.g., a UE using small rechargeable and single coin cell batteries). Among 5G use cases, sensors and actuators are widely deployed for monitoring, measurement, charging, etc., and generally, batteries are non-rechargeable and may require the battery to last at least several years or more. In addition, wearable devices may include smartwatches, rings, eHealth-related devices, medical monitoring devices, etc., which are generally difficult to last up to 1-2 weeks depending on usage time.

The power consumption of a 5G UE depends on the configured length of wake-up periods (e.g., a paging cycle), and a large value of an extended discontinuous reception (eDRX) cycle may be used to meet battery life requirements. However, since the eDRX scheme maintains a long battery life based on a high waiting time, it is not suitable for services with a low waiting time. For example, in a fire detection and extinguishing use case, it may be necessary to close fire shutters and turn on sprinklers by an actuator within 1 to 2 seconds from the time fire is detected by a sensor. In this case, since waiting time may be important, a conventional long eDRX cycle may not be suitable as it cannot satisfy latency requirements.

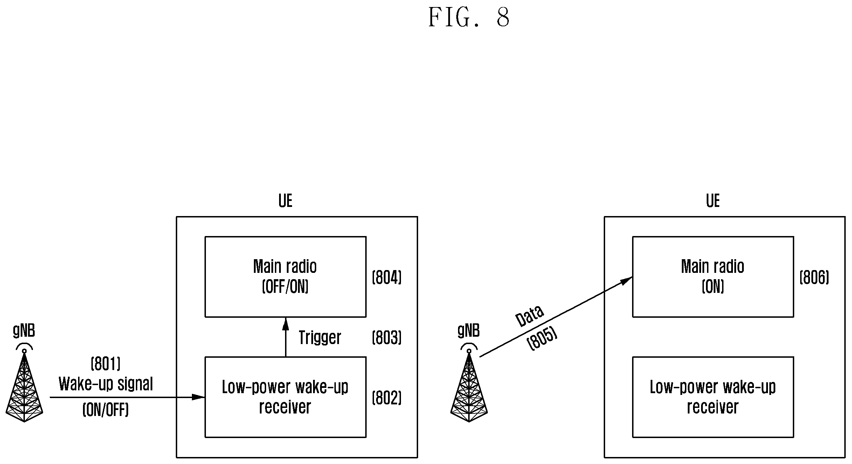

FIG. 8 illustrates an example of state transitions of a base station and a UE and a state of the UE according to a state of the base station, according to various embodiments of the disclosure. Specifically, FIG. 8 illustrates state transitions of the base station and the UE for resolving the above-described problems. Various changes may be made to the method illustrated in FIG. 8. For example, although illustrated as a series of steps, various steps in each drawing may overlap, occur in parallel, occur in a different order, or occur multiple times. In another example, some steps may be omitted or replaced by other steps.

According to an embodiment, a 5G UE (or a post-5G UE) may need to wake up periodically once per eDRX cycle, which may dominate power consumption during periods without signaling or data traffic. If the UE can wake up only when triggered, such as in paging, power consumption can be drastically reduced. This can be achieved, as shown in FIG. 8, by a method in which a base station triggers a main radio (e.g., a legacy NR radio or main radio (MR)) using a wake-up signal (WUS), and the UE is equipped with a wake-up receiver (WUR) (or a low power wake-up receiver (LP-WUR, LR)), which is a separate receiver capable of monitoring the WUS with ultra-low power, thereby turning on the main radio only when data transmission or reception is required.

According to an embodiment, in step 801, the base station may transmit a WUS corresponding to ON or OFF to the UE. The base station may transmit the WUS to the UE, and the WUS may include ON information or OFF information. According to an embodiment, before step 801, the base station may periodically transmit a WUR-dedicated synchronization signal (which will be referred to as a low power-synchronization signal (LP-SS), a new synchronization signal, etc., in the disclosure, but such terms are for exemplary purposes only and do not limit the scope of the disclosure) so that the UE can perform time or frequency synchronization in the WUR when receiving the WUS.

In step 802, the UE may receive the WUS using the wake-up receiver (WUR or low power wake-up receiver). According to an embodiment, to perform time or frequency synchronization of the WUR, the UE may receive the WUR-dedicated synchronization signal or a legacy synchronization signal before receiving the WUS.

In step 803, the UE may trigger the main radio, which is in an OFF or ON state, based on information that the WUS received using the WUR corresponds to ON or OFF. For example, triggering the main radio may refer to triggering a state transition for the main radio. For example, it may be a trigger for transitioning the main radio in the OFF state to the ON state, or a trigger for transitioning the main radio in the ON state to the OFF state.

In step 804, the UE may set the main radio to wake up or to a power-off state. For example, setting the main radio to the power-off state may mean that the main radio is completely turned off. Alternatively, according to an embodiment, the UE may set the main radio to a deep sleep (DS) state or an ultra deep sleep (UDS) state rather than a complete OFF state. Whether the main radio is in the complete OFF, DS, or UDS state may be distinguished according to which components

within the main radio can be turned off. For example, when the main radio is completely OFF, all components within the main radio may be OFF. When the main radio is in the DS state, an oscillator, a radio frequency-front end (RF-FE), and a baseband modem may be OFF, while a control processor and a double data rate (DDR) memory may still be ON. When the main radio is in the UDS state, the oscillator, the RF-FE, and the baseband modem may be OFF, and the control processor and the DDR memory may also operate at very low power or be completely OFF.

In step 805, if data traffic to be transmitted from the base station to the UE occurs and the WUS transmitted by the base station in step 801 is a signal corresponding to ON, then in step 806, the main radio may be turned ON, and the UE may receive data transmitted by the base station through the main radio instead of the WUR. That is, when the base station transmits the WUS corresponding to ON in step 801, the main radio of the UE may be turned ON. The base station may transmit data in step 805, and the UE may receive the data through the main radio in step 806.

Hereinafter, a procedure for waking up the main radio when the main radio is in a sleep state is described. According to an embodiment, the operation of waking up the main radio may be performed in combination with various operations according to various embodiments of the disclosure, may be performed separately, or may not be essential.

According to various embodiments of the disclosure, when there is a channel or signal to be transmitted to the UE, the base station may transmit a wake-up signal to the UE. The UE or the wake-up receiver may receive the wake-up signal and turn on the main radio. According to an embodiment, the operation itself of receiving the wake-up signal may be an indication to wake up the main radio. According to an embodiment, the wake-up signal may include K information bits, and information to wake up the main radio may be mapped to the K information bits. For example, when the information bit included in the wake-up signal is 1-bit information, '1' may indicate ON and '0' may indicate OFF. Alternatively, conversely, '0' may indicate ON and '1' may indicate OFF.

According to an embodiment, from a base station's transmission perspective, at which point in time before the transmission of a channel or signal the wake-up signal is to be transmitted may be predefined. From a UE's reception perspective, at which point in time before the reception of a channel or signal the wake-up signal can be received may also be predefined.

According to an embodiment, the UE may transmit information on a required time offset between the transmissions of the wake-up signal and the channel/signal to the base station, and the base station may configure the time offset between the transmissions of the wake-up signal and the channel/signal for the UE based on the received information. According to an embodiment, the UE may transmit the information on the required time offset between the transmissions of the wake-up signal and the channel/signal to the base station through a UE capability information reporting procedure, or may transmit the same to the base station through a random access preamble or an uplink data channel in a random access procedure. Of course, without being limited thereto, the UE may transmit the information on the time offset to the base station through a higher layer signal and/or transmit the same through various signals and/or a combination of various signals.

The base station may configure the information on the time offset between the transmissions of the wake-up signal and the channel/signal for the UE through a downlink data channel of a random access response (e.g., Message 2) or random access contention resolution (e.g., Message 4) in the random access procedure. Of course, without being limited thereto, the base station may configure the information on the time offset for the UE by a higher layer signal or configure the same through various signals and/or a combination of various signals.

According to various embodiments of the disclosure, when there is a periodic channel or signal to be transmitted from the base station to the UE, instead of an operation in which the base station transmits a wake-up signal every time there is a channel or signal to be transmitted, the UE or the wake-up receiver may turn on the main radio based on a period according to configuration information of the periodic channel or signal configured from the base station.

According to an embodiment, the base station may transmit a wake-up signal only for the first transmission of a periodic channel or signal, and may omit the transmission of the wake-up signal for subsequent repeated transmissions of the channel or signal. In this case, the UE or the wake-up receiver may turn on the main radio based on a period according to configuration information of the periodic channel or signal configured from the base station.

According to an embodiment, types of periodic channels or signals transmitted and received between the base station and the UE may be predefined. According to an embodiment, the types of periodic channels or signals may be configured from the base station. For example, the base station may configure the types of periodic channels or signals for the UE through a downlink data channel of a random access response (e.g., Message 2) or random access contention resolution (e.g., Message 4), or may configure the same for the UE through a higher layer signal indicating configuration information for receiving the wake-up signal or through another higher layer signal.

According to various embodiments of the disclosure, when there is a channel or signal (e.g., a physical random access channel (PRACH), a scheduling request (SR), or a buffer status report (BSR)) that the UE needs to transmit to the base station, or when the UE performs layer 1 (L1)/layer 3 (L3)-based measurement, the UE or the wake-up receiver may turn on the main radio regardless of the wake-up signal transmitted by the base station.

According to an embodiment, in case of uplink transmission to the base station or L1/L3-based measurement performed by the UE, an operation in which the wake-up receiver turns on/off the main radio of the UE upon receiving the

wake-up signal may not be applied. That is, in this case, even in a situation where the wake-up signal is not received, the wake-up receiver may turn on the main radio in advance, by a higher layer signal configuration from the base station (e.g., a configuration of resources and transmission/reception related to the uplink transmission or L1/L3-based measurement, or a configuration on whether to turn the main radio on/off by receiving the wake-up signal, or turn the main radio on/off according to the configuration of the uplink transmission or L1/L3-based measurement regardless of whether the wake-up signal is received), or the UE (or the main radio) may be in an ON state in advance rather than being turned on by the wake-up signal.

According to an embodiment, the uplink channel or signal type of the UE or the L1/L3-based measurement, transmitted or performed regardless of the wake-up signal reception, may be predefined. According to an embodiment, the uplink channel or signal type or the L1/L3-based measurement may be configured from the base station. For example, the base station may configure the uplink channel or signal type or the L1/L3-based measurement for the UE through a downlink data channel of a random access response (e.g., Message 2) or random access contention resolution (e.g., Message 4), or may configure the same for the UE through a higher layer signal indicating configuration information for receiving a wake-up signal or through another higher layer signal.

Hereinafter, according to various embodiments of the disclosure, an operation for turning off the main radio when the main radio is in an ON state is described. According to an embodiment, the operation of turning off the main radio when the main radio is in the ON state may be performed in combination with various operations according to various embodiments of the disclosure, may be performed separately, or may not be essential.

According to various embodiments of the disclosure, when there is no channel or signal to be transmitted to the UE, the base station may transmit a sleep signal to the UE. The UE or the wake-up receiver may receive the sleep signal and turn off the main radio. According to an embodiment, the operation itself of receiving the sleep signal may be an indication to put the main radio into sleep (or turn it off). According to an embodiment, the sleep signal may be composed of a sequence distinct from that of the wake-up signal. According to an embodiment, the sleep signal may include information mapped to an indication to put the main radio into a sleep state, within K information bits included in the wake-up signal. For example, in the case of 1-bit information, '0' may indicate OFF and '1' may indicate ON. For example, in the case of 1-bit information, '1' may indicate OFF and '0' may indicate ON. That is, if an information bit included in a specific signal indicates OFF, the specific signal may be interpreted as the sleep signal, and if it indicates ON, it may be interpreted as the wake-up signal. That is, the sleep signal and the wake-up signal may be distinguished according to the value of the information bit within the same signal.

According to various embodiments of the disclosure, the main radio of the UE may be turned off when a configured condition is satisfied. For example, a condition configured for the main radio (i.e., a condition for turning off the main radio) may be a case where the main radio fails to detect or decode a downlink control channel or a specific channel or signal within a configured interval. According to an embodiment, the base station may configure the UE with configuration information for determining whether to turn off the main radio (e.g., information including the interval and the specific channel or signal) through a higher layer signal indicating configuration information for receiving the wake-up signal or through another higher layer signal.

According to various embodiments of the disclosure, the main radio of the UE may always be turned off after receiving a single channel or signal. According to an embodiment, after the wake-up receiver receives the wake-up signal from the base station and the main radio is turned on and receives a channel or signal, the main radio may be turned off. According to an embodiment, the time required for turning off the main radio after completing the channel or signal reception may be predefined. According to an embodiment, the UE may transmit information on the time required for turning off the main radio to the base station, and the base station may configure the required time for the UE based on the received information. According to an embodiment, the information on the required time may be transmitted by the UE to the base station through a UE capability information reporting procedure. According to an embodiment, the information on the required time may be transmitted by the UE to the base station through a random access preamble or an uplink data channel. Of course, without being limited thereto, the UE may transmit the information on the required time to the base station through a higher layer signal. The base station may configure the UE with the information on the required time through a downlink data channel of a random access response (e.g., Message 2) or random access contention resolution (e.g., Message 4). Of course, without being limited thereto, the base station may configure the UE with the information on the required time by a higher layer signal.

According to various embodiments of the disclosure, when the UE or the main radio of the UE is in an RRC_CONNECTED state, connected mode DRX (C-DRX) may be configured for the UE, and the main radio may wake up every DRX cycle to perform PDCCH reception. According to an embodiment, when the UE or the main radio of the UE is in the RRC_CONNECTED state, the UE (or the main radio) may be configured to receive a signal indicating whether the UE should receive the PDCCH in the next DRX cycle.

According to an embodiment, when the main radio is in an RRC_IDLE/RRC_INACTIVE state, idle mode DRX (I-DRX) may be configured for the UE, and the main radio may wake up every paging cycle to receive a paging PDCCH. According to an embodiment, when the UE or the main radio of the UE is in the RRC_CONNECTED state, the UE (or the

main radio) may be configured to receive a signal indicating whether the UE should receive the paging PDCCH in the next paging cycle.

Hereinafter, according to various embodiments of the disclosure, a procedure of a UE operating with a wake-up receiver will be described for a case where an operation of ON/OFF indication based on reception of a wake-up signal for the wake-up receiver and a main radio and an operation according to a configuration of C-DRX or I-DRX coexist. According to an embodiment, an operation of the UE related to RRC_CONNECTED/IDLE/INACTIVE states or the main radio of the UE may be performed in combination with various operations according to various embodiments of the disclosure, may be performed separately, or may not be essential.

According to various embodiments of the disclosure, when the UE having the wake-up receiver performs an operation of turning on and off the main radio of the UE by receiving the wake-up signal, the UE may not perform the operation according to the C-DRX or I-DRX configuration. In this case, instead of performing the operation according to the C-DRX or I-DRX configuration, the UE may turn on its main radio only when receiving the wake-up signal to wake up the main radio, and may receive a physical downlink control channel (PDCCH) and a physical downlink shared channel (PDSCH) defined or configured to be received in C-DRX or I-DRX, respectively.

According to an embodiment, when the UE or its main radio is in the RRC_CONNECTED state and an operation performed by the wake-up receiver is configured or activated by the base station, the UE may turn on the main radio when the wake-up receiver receives the wake-up signal to wake up the main radio, and may also perform an operation related to C-DRX configured by the base station (e.g., the main radio receives a PDCCH within drx-onDurationTimer every DRX cycle). According to an embodiment, the UE (or the main radio) may not perform an operation configured to receive a signal indicating whether the UE should receive a PDCCH in the next DRX cycle (e.g., DCI format 2_6, wake-up signal).

According to an embodiment, when the UE or its main radio is in the RRC_IDLE/INACTIVE state and an operation performed by the wake-up receiver is configured or activated by the base station, the UE may turn on the main radio when the wake-up receiver receives the wake-up signal to wake up the main radio, and may also perform an operation related to I-DRX configured by the base station (e.g., the main radio wakes up every paging cycle to receive a paging PDCCH). According to an embodiment, the UE (or the main radio) may not perform an operation configured to receive a signal indicating whether the UE should receive a paging PDCCH in the next paging cycle (e.g., DCI format 2_7, paging early indication).

According to an embodiment, instead of the operation according to the configuration related to C-DRX or I-DRX, the UE may perform an operation for waking up the main radio and an operation for turning off the main radio according to the wake-up receiver and the wake-up signal according to various embodiments of the disclosure. If the operation performed by the wake-up receiver is deactivated by the base station, the operations related to the C-DRX or I-DRX configured by the base station may be performed again. That is, a priority of the operation based on the wake-up signal corresponding to the wake-up receiver may be higher than a priority of the operation according to the DRX configuration.

According to various embodiments of the disclosure, when the operation performed by the wake-up receiver of the UE is configured or activated by the base station, and the main radio is turned on by the UE or the wake-up receiver receiving the wake-up signal, the UE may transition to the RRC_CONNECTED state or transition to the RRC_IDLE or the RRC_INACTIVE state. According to an embodiment, whether the UE can transition to which state may be predetermined, or may be determined by a higher layer signal for a wake-up receiver operation configuration or a separate higher layer signal from the base station.

As an example of a case where information on the transition of the UE is predetermined, the state of the main radio may follow a state (RRC state) immediately before the main radio was most recently turned on and then turned off, prior to the current turn-on time. As another example of the case where information on the transition of the UE is predetermined, the state of the main radio may not be affected by whether the wake-up receiver operation is configured and activated. For example, the state of the main radio of the UE may be determined only by a higher layer signal indicating at least one of RRC_CONNECTED, RRC_IDLE, or RRC_INACTIVE, and the UE may determine that the state of the main radio is not changed by whether the wake-up receiver operation is configured and activated.

According to an embodiment, the wake-up signal may include K information bits, and information on at least one of whether the main radio will transition to the RRC_CONNECTED state, transition to the RRC_IDLE state, or transition to the RRC_INACTIVE state may be mapped to the K information bits.

According to an embodiment, when the UE or its main radio is in the RRC_CONNECTED state based on the determined state of the UE, the main radio may wake up every DRX cycle to receive a PDCCH by the C-DRX configured by the base station, or the UE (or the main radio) may be configured by the base station to receive a signal indicating whether the UE should receive the PDCCH in the next DRX cycle. According to an embodiment, when the operation for turning off the main radio according to various embodiments is performed while the UE is receiving the PDCCH (e.g., within an interval for receiving the PDCCH), the UE may perform the procedure for turning off the main radio with priority.

According to an embodiment, when the UE or its main radio is in the RRC_IDLE/INACTIVE state, the main radio may wake up every paging cycle to receive a paging PDCCH by the I-DRX configured by the base station. The UE (or the main radio) may also be configured by the base station to receive a signal indicating whether the UE should receive the

paging PDCCH in the next paging cycle. When the operation for turning off the main radio according to various embodiments is performed while the UE is receiving the paging PDCCH (e.g., within an interval for receiving the paging PDCCH), the UE may perform the procedure for turning off the main radio with priority.

According to various embodiments of the disclosure, the above-described various operations of the UE (or the main radio or the wake-up receiver) may be performed regardless of the order, and the subject of the operations may be interchangeably used among the UE, the main radio, or the wake-up receiver.

According to an embodiment, since power consumption for monitoring the WUS depends on the design of the WUS and a hardware module of the WUR used for signal detection and processing, gains can be maximized for power-sensitive and small form-factor devices, including Internet of Things (IoT) use cases (e.g., industrial sensors and controllers) and wearables.

According to an embodiment, UE capability information related to the wake-up receiver may be supported.

According to an embodiment, the UE including the wake-up receiver may report its capability to wake up the main radio using the wake-up receiver to the base station, or may report capability information indicating that the UE is equipped with the wake-up receiver to the base station.

According to an embodiment, the UE may report the capability information regarding the wake-up receiver to the base station through the UE capability information reporting procedure shown in FIG. 4.

According to an embodiment, the UE may report the capability information on the wake-up receiver to the base station through at least one stage of a random access preamble or an uplink data channel in the random access procedure shown in FIG. 3. According to an embodiment, a set of random access preambles that can be transmitted by the UE including the wake-up receiver may be transmitted to the UE as system information. The UE may select a random access preamble from the received set, and may transmit the selected random access preamble in step 310 of the random access procedure shown in FIG. 3.

According to an embodiment, after reporting the capability information on the wake-up receiver to the base station, the UE may receive information indicating whether to use the wake-up receiver from the base station through higher layer signaling or a physical signal.

According to an embodiment, when the base station supports the UE including the wake-up receiver (e.g., if the base station has hardware capable of transmitting the wake-up signal), the base station may determine the use or not of the wake-up receiver after receiving the capability information on the wake-up receiver from the UE.

According to an embodiment, the base station may transmit to the UE a signal indicating whether to use the wake-up receiver or configuration information for receiving the wake-up signal. For example, this may be understood as an authorization or an authorization procedure for the wake-up signal of the base station. According to an embodiment, the base station may transmit to the UE at least one of: indication information for UE reception of the wake-up signal or activation of the wake-up receiver, or indication information notifying of the transmission of the wake-up signal by the base station. Starting from a slot in which a signal (e.g., at least one of the signal indicating configuration information for reception of the wake-up signal, the indication information for UE reception of the wake-up signal or activation of the wake-up receiver, or the indication information notifying of the transmission of the wake-up signal by the base station) is received, and after slots configured by the base station (e.g., as defined in the standard), the UE may turn off the main radio and turn on the wake-up receiver to monitor the wake-up signal. According to an embodiment, before turning off the main radio, the UE may transmit to the base station, through the main radio, at least one of: feedback acknowledging the receipt of the signal indicating whether to use the wake-up receiver, or feedback indicating that the main radio has been turned off and the wake-up receiver has been turned on.

According to an embodiment, if the base station does not support the UE having the wake-up receiver, the base station may, after receiving the capability information on the wake-up receiver from the UE, transmit to the UE a signal indicating that the use of the wake-up receiver is unavailable. The UE may transmit to the base station feedback acknowledging the receipt of the signal indicating the unavailability of the wake-up receiver. According to an embodiment, the UE may perform operations based on parameters of a legacy power saving mechanism (e.g., C-DRX or I-DRX for paging) configured by the base station.

According to various embodiments of the disclosure, following the procedures for the capability reporting of the UE having the wake-up receiver and the determination of whether the wake-up receiver is supported (or authorized) by the base station, the wake-up receiver of the UE may receive the wake-up signal to perform operations of turning on and off the main radio of the UE.

According to an embodiment, the UE may independently perform an operation of turning on/off the main radio, an operation of reporting the capability of the UE equipped with the wake-up receiver, or procedures regarding whether the base station supports the wake-up receiver. For example, even in a case where the UE's capability reporting operation and the authorization procedure are not performed, the base station may transmit to the UE a signal indicating whether to use the wake-up receiver (or an activation/deactivation indication) or a signal indicating configuration information for receiving the wake-up signal. Accordingly, among UEs receiving signals from the base station, the UE having the wake-up receiver may perform the on/off operation of the main radio through the wake-up receiver. That is, at least part of the operations of

the UE and/or the base station according to an embodiment may be performed independently or may be applied in combination with other operations.

According to an embodiment, after the UE's capability reporting operation and the base station's authorization procedure are performed, the operation of performing on/off of the main radio through the wake-up receiver may be applied to all UEs supported by the cell (e.g., an RRC_CONNECTED UE, an RRC_IDLE/RRC_INACTIVE UE, or a UE accessing the cell (e.g., an RRC_CONNECTED UE)). When the UE's capability reporting operation and the base station's authorization procedure are not performed, the operation of performing on/off of the main radio through the wake-up receiver may be applied to an RRC_IDLE/RRC_INACTIVE UE camping in the cell supported by the base station.

In an embodiment, the RRC_CONNECTED UE or the RRC_IDLE/RRC_INACTIVE UE camping in the cell supported by the base station may, after performing measurement on a new synchronization signal or a legacy synchronization signal through the wake-up receiver, compare the measured value with a reference value configured via a higher layer signal from the base station; if the measured value is less than the configured reference value, the UE may determine not to operate the wake-up receiver. If the measured value is greater than the configured reference value, the UE may determine to operate the wake-up receiver.

In addition, various embodiments of the disclosure may include at least one of all, parts, or a combination of parts of various operations of the UE, including the wake-up receiver, and of the base station.

Hereinafter, according to various embodiments of the disclosure, operations of turning on and off the main radio of the UE having the wake-up receiver are described. Various embodiments of the disclosure may include at least one of all, parts, or a combination of parts of various operations of the UE (including the wake-up receiver) and the base station. At least parts of the operations of the UE and/or the base station according to an embodiment may be performed independently or applied in combination with other operations.

According to an embodiment, when the main radio of the UE is 'on', the UE may receive a downlink signal (or data) from the base station through the main radio. According to various embodiments of the disclosure, the main radio being 'on' may be expressed as the main radio being 'turned on' or the main radio being 'activated', but is not limited thereto and may be represented by a similar or substantially equivalent meaning. According to an embodiment, that the main radio is activated may mean that specific components of the UE or the main radio (e.g., radio frequency (RF) or baseband (BB), etc.) are turned on or activated, or may be defined by a standard (e.g., a 3GPP technical specification (TS) document). However, according to various embodiments of the disclosure, without being limited to the above, the main radio being activated may include performing a parameter or an operation based on a parameter of equivalent or substantially similar content.

Alternatively, that the main radio is activated may include that the UE or the main radio performs a reception operation of a specific channel or signal defined in the 3GPP TS document (e.g., an SS/PBCH block including a synchronization signal or a PDCCH including a downlink control channel).

According to an embodiment, when the main radio of the UE is 'off', the UE may be considered to be in a sleep interval, or the UE may not receive a downlink signal (or data) from the base station. According to various embodiments of the disclosure, the main radio being 'off' may be expressed as the main radio being 'turned off' or the main radio being 'deactivated', but is not limited thereto and may be represented by a similar or substantially equivalent meaning.

According to an embodiment, that the main radio is deactivated may mean that specific components of the UE or the main radio (e.g., radio frequency (RF) or baseband (BB), etc.) are turned off or deactivated, or may be defined by a standard (e.g., a 3GPP TS document). However, according to various embodiments of the disclosure, without being limited to the above, that the main radio is deactivated may include performing a parameter or an operation based on a parameter of equivalent or substantially similar content. Alternatively, that the main radio is deactivated may include that the UE or the main radio no longer performs a reception operation of a specific channel or signal defined in the 3GPP TS document (e.g., an SS/PBCH block including a synchronization signal or a PDCCH including a downlink control channel).

As described above, to reduce power consumption, the main radio is triggered to be 'on' through the wake-up receiver only when the UE receives the wake-up signal (or the WUS indicating ON) from the base station, enabling the main radio to receive a downlink signal from the base station, and the main radio may be turned off when the wake-up signal is not received.

In this case, the disclosure proposes UE operations required for beam failure detection and beam failure recovery when maintaining the main radio in the sleep state in a situation where the UE in the RRC_CONNECTED state is configured to receive the wake-up signal through the wake-up receiver.

Specifically, the disclosure defines operations of the main radio and the wake-up receiver for beam failure detection and beam failure recovery, and proposes a method and a device for operating the main radio and the wake-up receiver based on the determined beam failure detection result.

In describing the following embodiments, operations or procedures expressed as being performed by the main radio or the wake-up receiver for the UE equipped with the wake-up receiver (e.g., the UE having the capability of wake-up reception) may also be understood as being performed by the UE equipped with the wake-up receiver (e.g., the UE having the capability of wake-up reception).

For example, that the wake-up receiver receives a signal/channel may be understood as that the UE (and/or a processor included in the UE) receives the signal/channel through (or by using) the wake-up receiver. Alternatively, that the wake-up receiver performs measurement may be understood such that a signal/channel for measurement is received through the wake-up receiver, and based on this, the UE (and/or a processor included in the UE) performs a measurement operation.

Hereinafter, in the disclosure, a downlink signal may include control information (e.g., DCI) and/or data transmitted from the base station to the UE. For example, the downlink signal may also refer to a channel (e.g., PDCCH, PDSCH) for transmitting control information and/or data. Of course, it is not limited to the above examples.

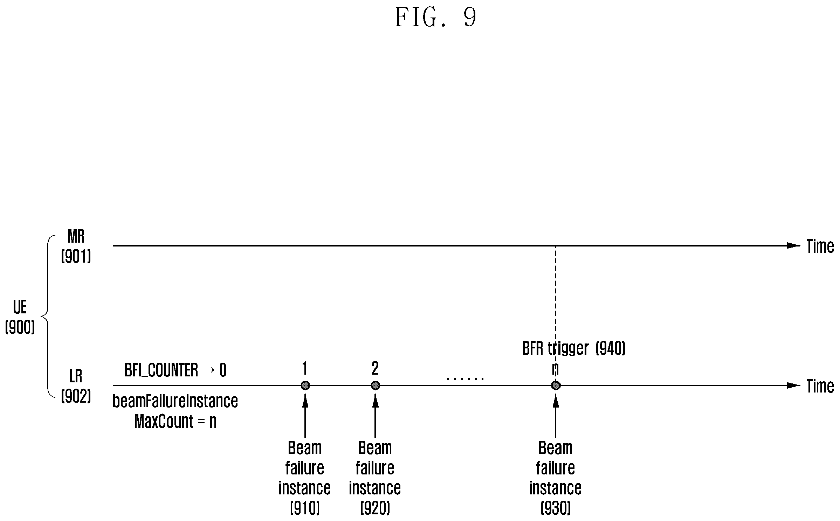

FIG. 9 illustrates an example of a beam failure detection and beam failure recovery scheme of a UE having a wake-up receiver, according to various embodiments of the disclosure.

Referring to FIG. 9, the scheme will be described in which the UE having the wake-up receiver performs beam failure detection and beam failure recovery when the wake-up receiver is configured and operating.

Referring to FIG. 9, a UE 900 includes a main radio 901 (e.g., MR) and a wake-up receiver 902 (e.g., LR). The main radio 901 may be configured by a higher layer signal from a base station to be in an RRC_CONNECTED state, and a situation where C-DRX is configured or not configured by the higher layer signal may be considered.

First, a scheme in which the wake-up receiver 902 performs beam failure detection instead of the main radio 901, and the main radio 901 performs beam failure recovery, will be described.

In an embodiment, when the wake-up receiver 902 is configured and activated to operate, the main radio 901 may no longer perform beam failure detection. Alternatively, when the wake-up receiver 902 is configured and activated to operate, the main radio 901 may not perform beam failure detection only in a case where the wake-up receiver 902 is turned on and/or the main radio 901 is turned off.

In an embodiment, the wake-up receiver 902 may perform beam failure detection instead of the main radio 901. In this case, parameters for beam failure detection configured for the main radio 901 may no longer be valid. At least some of the parameters for beam failure detection configured for the main radio 901 may not be used by the wake-up receiver 902. For example, parameters and timers for the main radio 901, including beamFailureDetectionTimer, beamFailureInstanceMaxCount, etc., may not be used for the beam failure detection of the wake-up receiver 902.

In addition, beam failure instances and an accumulated beam failure instance (BFI_COUNTER) determined before the wake-up receiver 902 is configured and activated to operate may no longer be valid and may not be used for the beam failure detection of the wake-up receiver 902. For example, a beam failure instance determined before the wake-up receiver 902 is activated may not be accumulated in the BFI_COUNTER after the wake-up receiver 902 is activated, and/or the BFI_COUNTER before the wake-up receiver 902 is activated may be initialized or ignored, or the BFI_COUNTER may be newly counted or accumulated according to a beam failure instance by the wake-up receiver 902 after the wake-up receiver 902 is activated. Alternatively, a beamFailureDetectionTimer restarted by a beam failure instance determined before the wake-up receiver 902 is configured and activated to operate may be stopped.

Accordingly, in an embodiment, parameters and timers for the wake-up receiver 902 may be configured by a higher layer signal. At least some of the parameters for beam failure detection for the wake-up receiver 902 may be configured separately/independently from at least some of the parameters for beam failure detection configured for the main radio 901. For example, at least one parameter among beamFailureDetectionTimer_WUS and beamFailureInstanceMaxCount_WUS may be configured for the beam failure detection of the wake-up receiver 902, and the wake-up receiver 902 may perform beam failure detection using the configured parameter. When a beam failure instance detected by the wake-up receiver 902 increases by 1, the timer beamFailureInstanceMaxCount_WUS may be restarted.

In an embodiment, parameters for beam failure detection configured for the main radio 901 may continue to be used in the wake-up receiver 902. At least some of the parameters for beam failure detection configured for the main radio 901 may be used by the wake-up receiver 902. For example, parameters and timers for the main radio 901, including beamFailureDetectionTimer and beamFailureInstanceMaxCount, may be continuously used for the beam failure detection of the wake-up receiver 902. For example, a beam failure instance determined before the wake-up receiver 902 is activated may be accumulated in the BFI_COUNTER after the activation of the wake-up receiver 902, and/or a beam failure instance by the wake-up receiver 902 after activation may be accumulated into the BFI_COUNTER existing before the wake-up receiver 902 was activated, and/or if the BFI_COUNTER from before the wake-up receiver 902 was activated satisfies a threshold condition for beam failure detection (BFD) (e.g., being greater than or equal to/exceeding a threshold), it may be identified/interpreted that a beam failure is detected even after the activation of the wake-up receiver 902.

Alternatively, a beamFailureDetectionTimer restarted by a beam failure instance determined before the wake-up receiver 902 is configured and activated to operate may still operate even after the wake-up receiver 902 is configured and activated to operate. In addition, a beam failure instance or an accumulated beam failure instance (BFI_COUNTER) determined before the wake-up receiver 902 is configured and activated to operate may also be valid and may be used for the beam failure detection of the wake-up receiver 902.

In an embodiment, hypothetical downlink control channel parameters for determining a beam failure instance in the beam failure detection by the wake-up receiver 902 may be determined to use values different from parameters for

determining a beam failure instance in the main radio 901. Alternatively, a block error rate (BLER) for determining a beam failure instance in the wake-up receiver 902 may be determined to use a value different from a BLER for determining a beam failure instance in the main radio 901. In addition, a signal for performing beam failure detection in the wake-up receiver 902 may be determined to use a signal different from that of the main radio 901. For example, it may be determined to use a new synchronization signal for performing time and frequency synchronization of the wake-up receiver 902, or it may be determined to use a legacy SS/PBCH block.

In an embodiment, a beam failure instance determined by the wake-up receiver 902 may be transmitted to a higher layer of the wake-up receiver or the main radio to be accumulated in the BFI_COUNTER in the higher layer, and if the BFI_COUNTER is greater than or equal to beamFailureInstanceMaxCount or beamFailureInstanceMaxCount_WUS, the higher layer may trigger beam failure recovery.

In an embodiment, whenever a beam failure instance 910, 920 or 930 is received, a higher layer of the UE (or the wake-up receiver) (or a MAC layer or the UE) restarts beamFailureDetectionTimer or beamFailureDetectionTimer_WUS, and accumulates and adds the beam failure instance to the BFI_COUNTER. If the UE does not receive an additional beam failure instance until the timer expires, the BFI_COUNTER is reset. If the BFI_COUNTER is greater than or equal to beamFailureInstanceMaxCount_WUS or beamFailureInstanceMaxCount, the UE may trigger beam failure recovery 940.

The UE (or the wake-up receiver) may turn on the main radio and perform random access for beam failure recovery. When performing the random access for beam failure recovery, a process of identifying a new candidate beam may be performed in remaining beams (resources) excluding a beam (resource) having a quasi co-location (QCL) relationship with a beam in which a beam failure is detected by the wake-up receiver 902. Alternatively, after the process of identifying a new candidate beam, the beam (resource) having a QCL relationship with the beam in which the beam failure is detected by the wake-up receiver 902 may be excluded. Thereafter, the UE may perform random access using a resource or a random access preamble configured for a candidate beam with a good channel state selected through the process. The UE may receive information related to a QCL relationship between a synchronization signal for synchronizing the wake-up receiver and an existing SS/PBCH or an existing CSI-RS through a higher layer signal. The information related to the QCL relationship may include at least one of an index (ID) or a transmission resource of the synchronization signal for the wake-up receiver, an index (ID) or a transmission resource of the existing synchronization signal, or an index (ID) or a transmission resource of the CSI-RS.

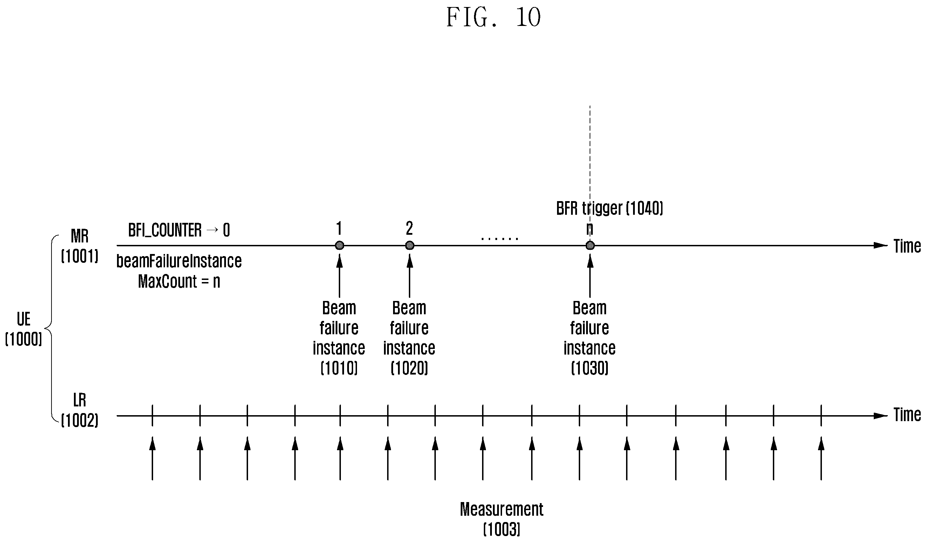

FIG. 10 illustrates an example of a beam failure detection and beam failure recovery scheme of a UE having a wake-up receiver, according to various embodiments of the disclosure.

Referring to FIG. 10, a scheme will be described in which a wake-up receiver 1002 of a UE 1000 triggers a main radio 1001 to perform beam failure detection, and the main radio 1001 performs beam failure detection and beam failure recovery. This embodiment may relate to the main radio 1001, which is in an OFF/sleep state, being triggered/turned on by the wake-up receiver 1002 to perform beam failure detection.

The wake-up receiver 1002 may receive a new synchronization signal or an existing synchronization signal for the wake-up receiver while the main radio 1001 is in the OFF/sleep state, and may periodically measure a magnitude or quality of the signal (1003). When the magnitude or quality of the signal is less than a threshold configured by a base station, the main radio 1001 is turned on, and the main radio 1001 may perform beam failure detection. Configuration information, including a period in which the wake-up receiver is to measure the synchronization signals, may be configured by a higher layer signal from the base station.

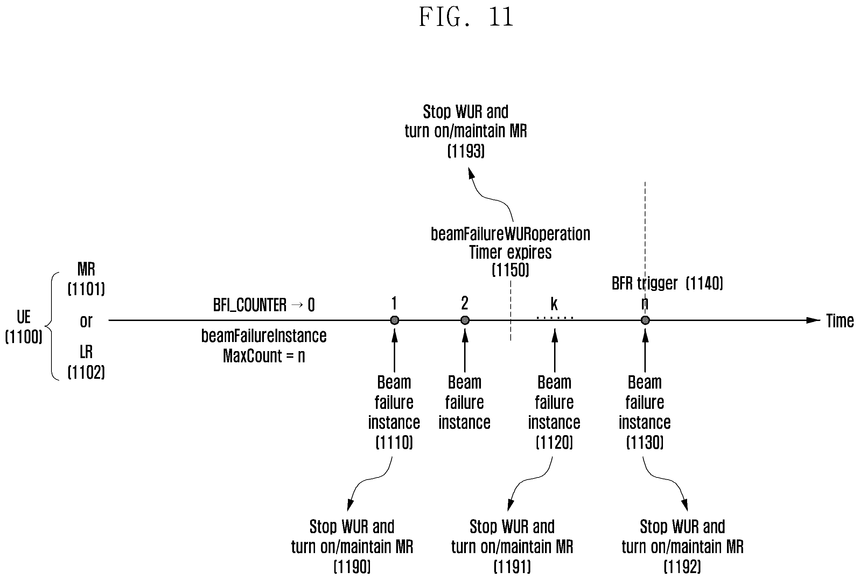

In an embodiment, the main radio 1001 performs beam failure detection to determine whether a beam quality of a signal (CSI-RS or a synchronization signal) configured for beam failure detection by the base station corresponds to a beam failure instance, and transmits a result to a higher layer of the UE, and then the main radio 1001 may be turned off again, transition to a sleep state, or maintain an ON state. For the main radio 1001 maintaining the ON state or for the wake-up receiver stopping monitoring a wake-up signal, an embodiment of the disclosure illustrated in FIG. 11 may be applied. For example, when a hypothetical downlink control channel block error rate (BLER) for the beam quality is greater than or equal to a predefined value (e.g., 10%), a beam failure instance may be reported to the higher layer. The wake-up receiver 1002 may perform wake-up signal monitoring and measurement of a synchronization signal (1003).

In an embodiment, while the wake-up receiver 1002 monitors a wake-up signal and performs measurement of a synchronization signal, if the main radio 1001 is in the OFF or sleep state, a timer such as beamFailureDetectionTimer may stop without proceeding. The timer such as beamFailureDetectionTimer may operate again only when the main radio 1001 is in the ON state. Accordingly, parameters related to beam failure detection, including the timers, may be stored in the UE so as to be maintained regardless of whether the main radio is ON/OFF/sleep.

In an embodiment, separate parameters for beam failure detection may be configured for a case where the wake-up receiver 1002 is configured and activated and for a case where the wake-up receiver 1002 is not configured or is not activated even if configured. That is, parameters and timers for beam failure detection, including beamFailureDetectionTimer, beamFailureInstanceMaxCount, etc., for a case of transmission/reception using only the main radio 1001 may be configured from the base station, and parameters and timers for beam failure detection, including beamFailureDetectionTimer, beamFailureInstanceMaxCount, etc., for a case where the main radio 1001 performs transmission/reception

together with the wake-up receiver 1002 may be separately configured from the base station.

In an embodiment, when beam failure detection is performed only when there is triggering by the synchronization signal measurement of the wake-up receiver, the higher layer of the UE restarts beamFailureDetectionTimer whenever each beam failure instance 1010, 1020, or 1030 is received, and accumulates and adds the beam failure instance to BFI_COUNTER. If the UE does not receive an additional beam failure instance until the timer expires, the BFI_COUNTER is reset. If the BFI_COUNTER is greater than or equal to beamFailureInstanceMaxCount, the UE may trigger beam failure recovery (1040). The UE (or MAC layer) may turn on the main radio and perform random access for beam failure recovery.

Although FIG. 10 illustrates a case where the main radio 1001 performs beam failure detection and beam failure recovery when there is triggering by the synchronization signal measurement of the wake-up receiver 1002, the disclosure is not limited thereto. For example, the above-described embodiment may also be applied to a case where the main radio 1001 performs beam failure detection and beam failure recovery when the wake-up receiver 1002 receives a wake-up signal to turn on the main radio.

FIG. 11 illustrates an example of a beam failure detection and beam failure recovery scheme of a UE having a wake-up receiver, according to various embodiments of the disclosure.

The embodiment illustrated in FIG. 11 relates to a UE procedure regarding, when a UE 1100 performs beam failure detection through a main radio 1101 or a wake-up receiver 1102, whether to receive a wake-up signal through the wake-up receiver and turn off or sleep the main radio for downlink signal reception, or whether to stop receiving the wake-up signal through the wake-up receiver and turn on the main radio.

In an embodiment, when the main radio or the wake-up receiver determines a first beam failure instance (1110) or when beamFailureDetectionTimer or beamFailureDetectionTimer_WUS is started for the first time, the UE may stop receiving the wake-up signal through the wake-up receiver and may turn on or maintain the ON state of the main radio so as to directly receive a downlink signal through the main radio (1190).

The UE may transmit information related to the operations of the wake-up receiver and the main radio to the base station through an uplink channel or an uplink signal. This information may include at least one of information indicating that the wake-up receiver is changed to the OFF state so as not to monitor the wake-up signal, or information indicating that the main radio is changed to the ON state so as to monitor the downlink signal.

If the beamFailureDetectionTimer or beamFailureDetectionTimer_WUS expires, monitoring of the wake-up signal through the wake-up receiver may be performed and the main radio may be transitioned to the sleep state or turned off. Alternatively, after receiving a signal for activating the wake-up receiver from the base station, the wake-up receiver may be turned on again to monitor the wake-up signal, and the main radio may be transitioned to the sleep state or turned off.

In an embodiment, when the main radio or the wake-up receiver determines k consecutive beam failure instances, i.e., when BFI_COUNTER is k (1120), the UE may stop receiving the wake-up signal through the wake-up receiver and may turn on or maintain the ON state of the main radio so as to directly receive the downlink signal through the main radio (1191).

The UE may transmit information related to the operations of the wake-up receiver and the main radio to the base station through an uplink channel or an uplink signal. This information may include at least one of information indicating that the wake-up receiver is changed to the OFF state so as not to monitor the wake-up signal, or information indicating that the main radio is changed to the ON state so as to monitor the downlink signal.

If the restarted beamFailureDetectionTimer or beamFailureDetectionTimer_WUS expires, monitoring of the wake-up signal through the wake-up receiver may be performed and the main radio may be transitioned to the sleep state or turned off. Alternatively, after receiving a signal for activating the wake-up receiver from the base station, the wake-up receiver may be turned on again to monitor the wake-up signal, and the main radio may be transitioned to the sleep state or turned off.

In an embodiment, a timer (beamFailureWURoperationTimer) for stopping the wake-up signal monitoring operation of the wake-up receiver and making the main radio sleep or turn off may be defined. The timer operates when the first beam failure instance is received, and when the beamFailureDetectionTimer expires and the BFI_COUNTER is reset, the beamFailureWURoperationTimer may be restarted. When the beamFailureWURoperationTimer expires (1150), the UE may stop receiving the wake-up signal through the wake-up receiver and may turn on or maintain the ON state of the main radio so as to directly receive the downlink signal through the main radio (1193).

The UE may transmit information related to the operations of the wake-up receiver and the main radio to the base station through an uplink channel or an uplink signal. This information may include at least one of information indicating that the wake-up receiver is changed to the OFF state so as not to monitor the wake-up signal, or information indicating that the main radio is changed to the ON state so as to monitor the downlink signal. If a signal for activating the wake-up receiver is received from the base station, the wake-up receiver may be turned on again to monitor the wake-up signal, and the main radio may be transitioned to the sleep state or turned off.

In an embodiment, when the main radio or the wake-up receiver determines that the accumulated number of BFI_COUNTER is greater than or equal to beamFailureInstanceMaxCount and triggers beam failure recovery (1140), the

UE may stop receiving the wake-up signal through the wake-up receiver and may turn on or maintain the ON state of the main radio so as to directly receive the downlink signal through the main radio (1192).

The UE may transmit information related to the operations of the wake-up receiver and the main radio to the base station through an uplink channel or an uplink signal. This information may include at least one of information indicating that the wake-up receiver is changed to the OFF state so as not to monitor the wake-up signal, or information indicating that the main radio is changed to the ON state so as to monitor the downlink signal. When the UE receives a signal for activating the wake-up receiver from the base station after successfully recovering from the beam failure, the wake-up receiver may be turned on again to monitor the wake-up signal, and the main radio may be transitioned to the sleep state or turned off.

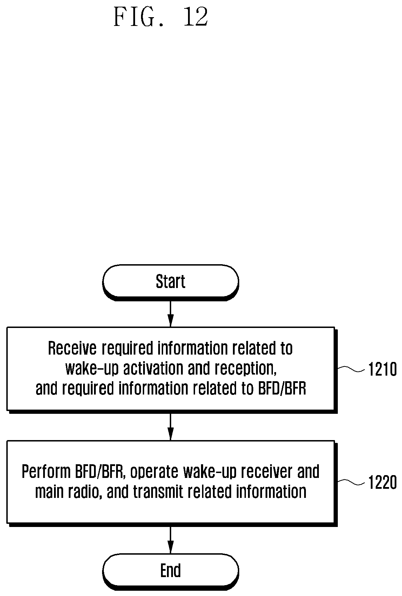

FIG. 12 illustrates an operational flow for beam failure detection and beam failure recovery of a UE having a wake-up receiver, according to various embodiments of the disclosure. Various changes may be made to the method illustrated in FIG. 12. For example, although illustrated as a series of steps, various steps in each drawing may overlap, occur in parallel, occur in a different order, or occur multiple times. In another example, some steps may be omitted or replaced by other steps.

Referring to FIG. 12, in step 1210, the UE may receive a wake-up activation signal or a wake-up deactivation signal. The UE may receive the wake-up activation signal from a base station to receive a wake-up signal by using a wake-up receiver, or may receive the wake-up deactivation signal from the base station so as to no longer receive the wake-up signal by using the wake-up receiver. In addition, the UE may receive information required for receiving the wake-up signal from the base station. In an embodiment, the UE may receive, from the base station, information including at least one of an indication of whether to use the wake-up receiver and configuration information for receiving the wake-up signal. Furthermore, the UE may also receive information required for performing beam failure detection and beam failure recovery from the base station.

In step 1220, the UE may perform beam failure detection and beam failure recovery according to an embodiment of the disclosure, determine operations of the wake-up receiver and a main radio to operate the same, and transmit related information to the base station. In an embodiment, when the wake-up receiver is not configured or is not activated, beam failure detection and beam failure recovery for a legacy UE may be performed.

For more detailed descriptions of the UE operations according to an embodiment of the disclosure, reference may be made to the descriptions of the above-described embodiments of the disclosure.

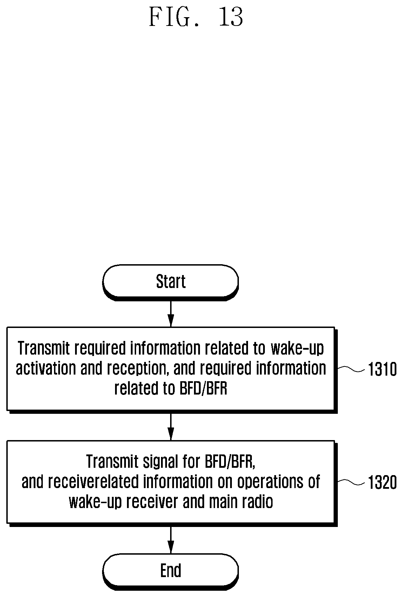

FIG. 13 illustrates an operational flow of a base station for transmitting a downlink signal, according to various embodiments of the disclosure. Various changes may be made to the method illustrated in FIG. 13. For example, although illustrated as a series of steps, various steps in each drawing may overlap, occur in parallel, occur in a different order, or occur multiple times. In another example, some steps may be omitted or replaced by other steps.

Referring to FIG. 13, in step 1310, the base station may transmit a wake-up activation signal or a wake-up deactivation signal. The base station may transmit the wake-up activation signal to a UE so that the UE can receive a wake-up signal by using a wake-up receiver, or may transmit the wake-up deactivation signal to the UE so that the UE no longer receives the wake-up signal by using the wake-up receiver. In addition, the base station may transmit, to the UE, information required for the UE to receive the wake-up signal. In an embodiment, the base station may transmit, to the UE, information including at least one of an indication of whether the UE is to use the wake-up receiver, and configuration information for the UE to receive the wake-up signal. Furthermore, the base station may also transmit, to the UE, information required for the UE to perform beam failure detection and beam failure recovery.

In step 1320, the base station may transmit a wake-up signal, a synchronization signal, and a downlink signal for performing beam failure detection and beam failure recovery according to an embodiment of the disclosure. In an embodiment, when the wake-up receiver is configured or activated and turned on to monitor a wake-up signal, and the UE is capable of receiving the wake-up signal, the base station may transmit a synchronization signal according to an embodiment of the disclosure. In an embodiment, when the base station does not configure the wake-up receiver or configures it not to be activated, the base station may transmit a signal based on beam failure detection and beam failure recovery for a legacy UE. In an embodiment, the base station may receive related information on operations of the wake-up receiver and a main radio from the UE.

For more detailed descriptions of the base station operations according to an embodiment of the disclosure, reference may be made to the descriptions of the above-described embodiments of the disclosure.

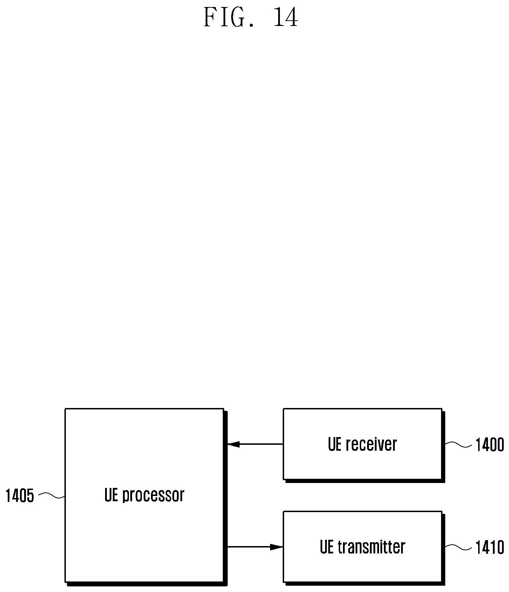

FIG. 14 is a diagram illustrating a structure of a UE in a wireless communication system according to an embodiment of the disclosure.

Referring to FIG. 14, the UE may include a transceiver (referring to a UE receiver 1400 and a UE transmitter 1410), a memory (not shown), and a UE processor 1405 (or a UE controller or processor). The transceiver 1400 and 1410, the memory, and the UE processor 1405 of the UE may operate in accordance with the aforementioned communication method of the UE. However, the components of the UE are not limited to the above-described examples. For example, the UE may include more or fewer components than those aforementioned. In addition, the transceiver, the memory, and the processor may be implemented in the form of a single chip.

The transceiver may transmit and receive signals to and from a base station. Here, the signals may include

control information and data. To this end, the transceiver may include an RF transmitter for up-converting and amplifying the frequency of a transmitted signal, and an RF receiver for low-noise amplifying a received signal and down-converting the frequency of the received signal. However, this is only an embodiment of the transceiver, and components of the transceiver are not limited to the RF transmitter and the RF receiver.

In addition, the transceiver may receive a signal through a radio channel and output the received signal to the processor, and may transmit a signal output from the processor through a radio channel.

The memory may store programs and data required for the operation of the UE. In addition, the memory may store control information or data included in signals transmitted and received by the UE. The memory may include a storage medium such as a ROM, a RAM, a hard disk, a CD-ROM, and a DVD, or a combination of storage media. Also, there may be a plurality of memories.

Additionally, the processor may control a series of processes so that the UE operates in accordance with the above-described embodiments. For example, the processor may control the components of the UE to receive DCI composed of two layers and simultaneously receive a plurality of PDSCHs. There may be a plurality of processors, and the processor may perform a control operation for the components of the UE by executing a program stored in the memory.

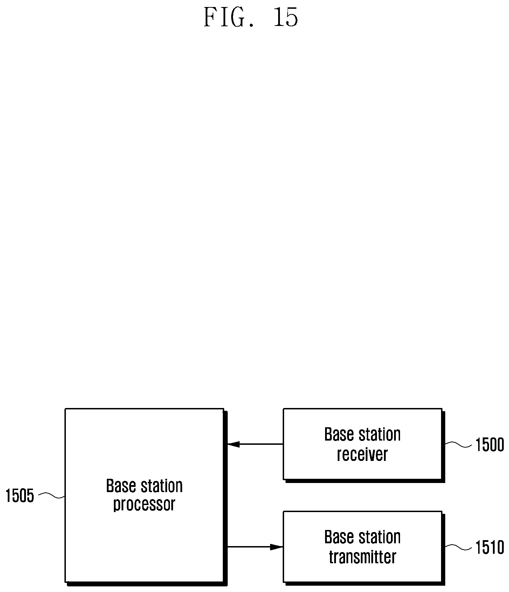

FIG. 15 is a diagram illustrating a structure of a base station in a wireless communication system according to an embodiment of the disclosure.

Referring to FIG. 15, the base station may include a transceiver (referring to a base station receiver 1500 and a base station transmitter 1510), a memory (not shown), and a base station processor 1505 (or a base station controller or processor). The transceiver 1500 and 1510, the memory, and the base station processor 1505 of the base station may operate in accordance with the aforementioned communication method of the base station. However, the components of the base station are not limited to the above-described examples. For example, the base station may include more or fewer components than those aforementioned. In addition, the transceiver, the memory, and the processor may be implemented in the form of a single chip.

The transceiver may transmit and receive signals to and from a UE. Here, the signals may include control information and data. To this end, the transceiver may include an RF transmitter for up-converting and amplifying the frequency of a transmitted signal, and an RF receiver for low-noise amplifying a received signal and down-converting the frequency of the received signal. However, this is only an embodiment of the transceiver, and the components of the transceiver are not limited to the RF transmitter and the RF receiver.

In addition, the transceiver may receive a signal through a radio channel and output the received signal to the processor, and may transmit a signal output from the processor through a radio channel.

The memory may store programs and data required for the operation of the base station. In addition, the memory may store control information or data included in signals transmitted and received by the base station. The memory may include a storage medium such as a ROM, a RAM, a hard disk, a CD-ROM, and a DVD, or a combination of storage media. Also, there may be a plurality of memories.

The processor may control a series of processes so that the base station operates in accordance with the above-described embodiments of the disclosure. For example, the processor may control the components of the base station to compose DCI of two layers including allocation information regarding multiple PDSCHs and transmit the DCI. There may be a plurality of processors, and the processor may perform a control operation for the components of the base station by executing a program stored in the memory.

The methods according to embodiments described herein or claims may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The one or more program may include instructions that cause the electronic device to perform the methods according to various embodiments as defined by the appended claims and/or disclosed herein.

The programs (software modules or software) may be stored in a random access memory, a non-volatile memory including a flash memory, a read only memory (ROM), an electrically erasable programmable read-only memory (EEPROM), a magnetic disc storage device, a compact disc-ROM (CD-ROM), digital versatile discs (DVDs), other types of optical storage devices, or a magnetic cassette. Alternatively, the programs may be stored in a memory composed of a combination of some or all of them. Further, a plurality of such memories may be included.

Furthermore, the programs may be stored in an attachable storage device that can be accessed through a communication network such as the Internet, an Intranet, a local area network (LAN), a wide LAN (WLAN), a storage area network (SAN), or a combination thereof. Such a storage device may connect to a device performing an embodiment of the disclosure through an external port. In addition, a separate storage device on a communication network may connect to the device performing an embodiment of the disclosure.

In the specific embodiments of the disclosure described above, components included in the disclosure are expressed in the singular or plural according to the embodiments presented. However, the singular or plural expressions

are selected appropriately for the context presented for convenience of description, and the disclosure is not limited to singular or plural components. Even a component expressed in the plural may be composed of the singular, or even a component expressed in the singular may be composed of the plural.

Meanwhile, although specific embodiments are described in the detailed description of the disclosure, various modifications are possible without departing from the scope of the disclosure. For example, some or all of some embodiments may be combined with some or all of one or more other embodiments, and such combinations also correspond to the embodiments proposed in the disclosure. Therefore, the scope of the disclosure should not be determined by being limited to the described embodiments, and should be determined by the following claims as well as equivalents to the scope of these claims.

Although specific embodiments are described in the detailed description of the disclosure, various modifications are possible without departing from the scope of the disclosure. Therefore, the scope of the disclosure should not be determined by being limited to the described embodiments, and should be determined not only by the following claims but also by equivalents to the scope of these claims.

## Claims

**1.** A method performed by a terminal in a communication system, the method comprising:

receiving, via higher layer signaling, information on a timer for beam failure detection (BFD) and information on a maximum count for a beam failure instance (BFI);
identifying that the terminal is configured to a first state associated with a low-power operation; and
identifying whether to trigger a beam failure recovery (BFR) based on the timer and the maximum count for the BFI,
wherein identifying whether to trigger the BFR comprises:
performing measurement for a first reference signal corresponding to the first state.

**2.** The method of claim 1, wherein identifying whether to trigger the BFR comprises:

identifying a BFI based on the measurement for the first reference signal;
identifying a BFI counter based on the BFI; and
identifying whether to trigger the BFR based on the timer, the BFI counter, and the BFI maximum count, and wherein, in identifying the BFI counter:

a BFI identified based on measurement for a second reference signal corresponding to a second state associated with a normal operation different from the low-power operation, prior to identifying that the WUR is activated, is identified as being invalid, or
a BFI identified based on measurement for the second reference signal via a main radio (MR) of the terminal, prior to identifying that the WUR is activated, is accumulated in the BFI counter.

**3.** The method of claim 1, wherein identifying whether to trigger the BFR comprises:

identifying a BFI based on the measurement for the first reference signal;
identifying a BFI counter based on the BFI; and
identifying whether to transition to a second state associated with a normal operation different from the low-power operation based on the BFI counter,
wherein, in case that the terminal transitions to the second state, identifying whether to trigger the BFR is performed based on measurement for a second reference signal corresponding to the second state.

**4.** The method of claim 3, wherein, in identifying whether the terminal is to transition to the second state:

in case that the BFI counter is greater than or equal to the maximum count for the BFI before the timer expires, the terminal is identified to transition to the second state, or
in case that the BFI counter is a predefined value, the terminal is identified to transition to the second state, wherein the predefined value is less than the BFI maximum count.

**5.** The method of claim 1, comprising:

receiving a timer for the first state via the higher layer signaling;
in case that the timer for the first state expires, transitioning to a second state associated with a normal operation different from the low-power operation; and
identifying whether to trigger the BFR based on measurement for a second reference signal corresponding to the second state.

**6.** The method of claim 1, wherein the first state corresponds to activation of a wake-up receiver (WUR) of the terminal,

wherein a second state accodicated with a normal operation different from the low-power operation corresponds to activation of a main radio (MR) of the terminal,
wherein in case that the BFR is identified to be triggered, the WUR of the terminal is deactivated and the MR of the terminal is activated, and
wherein at least one of the timer or the maximum count for the BFI is configured as separate parameters for the MR of the terminal and the WUR of the terminal.

**7.** The method of claim 1, further comprising:

transmitting information on a candidate beam reference signal in case that the BFR is identified to be triggered,
wherein the candidate beam reference signal is identified from among remaining candidate beam reference signals excluding one or more candidate beam reference signals associated with the first reference signal among a plurality of candidate beam reference signals included in a candidate beam reference signal list, and
wherein information on the candidate beam reference signal list and information on an association between the first reference signal and the one or more candidate beam reference signals are received via the higher layer signaling.

**8.** A terminal in a communication system, the terminal comprising:

a transceiver; and
a processor coupled with the transceiver, the processor configured to:

receive, via higher layer signaling, information on a timer for beam failure detection (BFD) and information on a maximum count for a beam failure instance (BFI);
identify that the terminal is configured to a first state associated with a low-power operation; and
identify whether to trigger a beam failure recovery (BFR) based on the timer and the maximum count for the BFI,
wherein, in identifying whether to trigger the BFR, the processor is configured to:
perform measurement for a first reference signal corresponding to the first state.

**9.** The terminal of claim 8, wherein, in identifying whether to trigger the BFR, the processor is configured to:

identify a BFI based on the measurement for the first reference signal;
identify a BFI counter based on the BFI; and
identify whether to trigger the BFR based on the timer, the BFI counter, and the BFI maximum count, and
wherein, in identifying the BFI counter:

a BFI identified based on measurement for a second reference signal corresponding to a second state associated with a normal operation different from the low-power operation, prior to identifying that the WUR is activated, is identified as being invalid, or
a BFI identified based on measurement for the second reference signal via a main radio (MR) of the terminal, prior to identifying that the WUR is activated, is accumulated in the BFI counter.

**10.** The terminal of claim 8, wherein, in identifying whether to trigger the BFR, the processor is configured to:

identify a BFI based on the measurement for the first reference signal;
identify a BFI counter based on the BFI; and
identify whether to transition to a second state associated with a normal operation different from the low-power operation based on the BFI counter,
wherein, in case that the terminal transitions to the second state, identifying whether to trigger the BFR is

performed based on measurement for a second reference signal corresponding to the second state, and wherein, in identifying whether the terminal is to transition to the second state:

in case that the BFI counter is greater than or equal to the maximum count for the BFI before the timer expires, the terminal is identified to transition to the second state, or
in case that the BFI counter is a predefined value, the terminal is identified to transition to the second state, wherein the predefined value is less than the BFI maximum count.

**11.** The terminal of claim 8, wherein the processor is configured to:

receive a timer for the first state via the higher layer signaling;
in case that the timer for the first state expires, transition to a second state associated with a normal operation different from the low-power operation; and
identify whether to trigger the BFR based on measurement for a second reference signal corresponding to the second state.

**12.** The terminal of claim 8, wherein the first state corresponds to activation of a wake-up receiver (WUR) of the terminal,

wherein a second state accodicated with a normal operation different from the low-power operation corresponds to activation of a main radio (MR) of the terminal,
wherein in case that the BFR is identified to be triggered, the WUR of the terminal is deactivated and the MR of the terminal is activated, and
wherein at least one of the timer or the maximum count for the BFI is configured as separate parameters for the MR of the terminal and the WUR of the terminal.

**13.** The terminal of claim 8, wherein the processor is configured to:

transmit information on a candidate beam reference signal in case that the BFR is identified to be triggered,
wherein the candidate beam reference signal is identified from among remaining candidate beam reference signals excluding one or more candidate beam reference signals associated with the first reference signal among a plurality of candidate beam reference signals included in a candidate beam reference signal list, and
wherein information on the candidate beam reference signal list and information on an association between the first reference signal and the one or more candidate beam reference signals are received via the higher layer signaling.

**14.** A method performed by a base station in a communication system, the method comprising:

transmitting, via higher layer signaling, information on a timer for beam failure detection (BFD) and information on a maximum count for a beam failure instance (BFI) to a terminal;
identifying that the terminal is configured to a first state associated with a low-power operation;
transmitting a first reference signal corresponding to the first state to the terminal; and
performing an operation related to a beam failure recovery (BFR) for the terminal,
wherein the BFR is based on the timer, the maximum count for the BFI, and the first reference signal.

**15.** A base station in a communication system, the base station comprising:

a transceiver; and
a processor connected to the transceiver, the processor configured to:

transmit, via higher layer signaling, information on a timer for beam failure detection (BFD) and information on a maximum count for a beam failure instance (BFI) to a terminal;
identify that the terminal is configured to a first state associated with a low-power operation;
transmit a first reference signal corresponding to the first state to the terminal; and
perform an operation related to a beam failure recovery (BFR) for the terminal,
wherein the BFR is based on the timer, the maximum count for the BFI, and the first reference signal.

FIG. 1

Frame (114)
Subframe (105)
Slot
(106)
$N_{BW}$ subcarriers of transmission bandwidth (104)
Resource element (112)
$N^{RB}_{sc}$ subcarriers (110)
Frequency
$N^{slot}_{symb}$ symbols (102)
Time

FIG. 2

SS/PBCH periodicity = P
Half-frame = 0.5 ms
SS/PBCH block
#0
#1
#2
#3
#4
.....
#L-1
Time
t1
(201)
t2
(202)
UE1
(205)
(203)
#d0
#d1
#d2
#d3
#d4
Beam sweeping
gNB
UE2
(206)
(204)

FIG. 3

UE
gNB
①
Random access preamble
Message 1
[310]
②
Random access response
Message 2
[320]
③
Scheduled transmission
Message 3
[330]
④
Contention resolution
Message 4
[340]

FIG. 4

401
UE
402
gNB
UE capability information request
410
UE capability information
420

FIG. 5

gNB
UE
(505)
Slot #n
PRACH
(500)
PRACH spatial filter
(545)
Slot #n+4
(510)
PDCCH/PDSCH:
- QCLed with candidate beam RS
(515)
PDCCH
(530)
28 symbols
(535)
(520)
TCI state for PDCCH
TCI activation/config.
(525)
pucch-spatialrelationinfo
(540)
(546)
PUCCH spatial filter:
- Use the one of last PRACH
(550)
PUCCH power control parameter:
- p0=0
- PLRS: candidate beam RS
- Closed-loop index: 0
(560)
CORESET0:
- QCLed with candidate beam RS
pucch-spatialrelationinfo activation/config.
(555)

gNB
UE
PUCCH
(600)
PDCCH
(605)
PUSCH
(610)
BFR MAC-CE info
- SCell index: #1 (PUCCH-SCell), #2
- Candidate beam RS: Exist for SCell#1 and #2
- Candidate beam RS index: #10, #15
(611)
PDCCH
(615)
28 symbols
(620)
SCell #1
(PUCCH-SCell)
SCell #2
(625)
(630)
All CORESET:
- QCLed with candidate beam RS#10
PUCCH spatial domain filter:
- Use the one corresponding to candidate beam RS#10
PUCCH power control parameter:
- p0=0
- PLRS: candidate beam RS#10
- Closed-loop index: 0
All CORESET:
- QCLed with candidate beam RS#15


FIG. 6

FIG. 7

gNB
UE
PUCCH
(700)
PDCCH
(705)
PUSCH
(710)
PDCCH
(715)
28 symbols
(720)
enhanced BFR MAC-CE info
SCell index: #1 - two BFD-RS sets
- Quality less than threshold: BFD-RS set#1
- Candidate beam RS for set#1: Exist, index=#5
SCell index#2 - two BFD-RS sets
- Quality less than threshold: BFD-RS set#1, #2
- Candidate beam RS for set#1: Exist, index=#10
- Candidate beam RS for set#2: Exist, index=#15
(711)
SCell #1
SCell #2
CORESET with coresetPoolIndex 0
- QCLed with candidate beam RS#5
(725)
(730)
CORESET with coresetPoolIndex 1
- No beam failures, still connected well
(735)
(740)
CORESET with coresetPoolIndex 0
- QCLed with candidate beam RS#10
CORESET with coresetPoolIndex 1
- QCLed with candidate beam RS#15

FIG. 8

gNB
(801)
Wake-up signal
(ON/OFF)
UE
Main radio
(OFF/ON)
(804)
Trigger
(803)
Low-power wake-up
receiver
(802)
gNB
Data
(805)
UE
Main radio
(ON)
(806)
Low-power wake-up
receiver

FIG. 9

UE
(900)
MR
(901)
LR
(902)
Time
Time
BFI_COUNTER → 0
beamFailureInstance
MaxCount = n
1
2
n
BFR trigger (940)
Beam
failure
instance
(910)
Beam
failure
instance
(920)
Beam
failure
instance
(930)

Time
Time
BFR trigger (1040)
n
Beam failure instance (1030)
2
Beam failure instance (1020)
1
Beam failure instance (1010)
BFI_COUNTER → 0
beamFailureInstance MaxCount = n
MR (1001)
LR (1002)
UE (1000)
Measurement (1003)

FIG. 10

FIG. 11

UE (1100)
MR (1101)
or
LR (1102)
BFI_COUNTER → 0
beamFailureInstance MaxCount = n
1
2
k
n
Beam failure instance (1110)
Beam failure instance
Beam failure instance (1120)
Beam failure instance (1130)
BFR trigger (1140)
beamFailureWURoperation Timer expires (1150)
Stop WUR and turn on/maintain MR (1190)
Stop WUR and turn on/maintain MR (1191)
Stop WUR and turn on/maintain MR (1192)
Stop WUR and turn on/maintain MR (1193)
Time

FIG. 12

Start
Receive required information related to wake-up activation and reception, and required information related to BFD/BFR
1210
Perform BFD/BFR, operate wake-up receiver and main radio, and transmit related information
1220
End

FIG. 13

Start
Transmit required information related to wake-up activation and reception, and required information related to BFD/BFR
1310
Transmit signal for BFD/BFR, and receiverelated information on operations of wake-up receiver and main radio
1320
End

FIG. 14

UE receiver
1400
1405
UE processor
UE transmitter
1410

FIG. 15

Base station receiver
1500
1505
Base station processor
Base station transmitter
1510

# INTERNATIONAL SEARCH REPORT

International application No.
**PCT/KR2024/017678**

**A. CLASSIFICATION OF SUBJECT MATTER**

**H04W 52/02**(2009.01)i; **H04W 24/08**(2009.01)i; **H04B 7/06**(2006.01)i

According to International Patent Classification (IPC) or to both national classification and IPC

**B. FIELDS SEARCHED**

Minimum documentation searched (classification system followed by classification symbols)

H04W 52/02(2009.01); H04B 7/06(2006.01); H04W 24/02(2009.01); H04W 24/10(2009.01); H04W 72/231(2023.01); H04W 76/19(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: BFD, 타이머(timer), BFI, 최대 카운트(max count), 저-전력 동작(low-power operation), BFR, 기준 신호(reference signal)

**C. DOCUMENTS CONSIDERED TO BE RELEVANT**

| Category* | Citation of document, with indication, where appropriate, of the relevant passages | Relevant to claim No. |
|---|---|---|
| Y<br>A | SAMSUNG. Introduction of support for network controlled repeaters. R2-2312887, 3GPP TSG RAN WG2 Meeting #124. Chicago, USA. 03 November 2023.<br>See page 8. | 1,8,14-15<br>2-7,9-13 |
| Y | MODERATOR (NORDIC SEMICONDUCTOR ASA). Summary #1 of discussions on L1 signal design and procedure for low power. R1-2304036, 3GPP TSG RAN WG1 Meeting #112b-e, e-Meeting. 19 April 2023.<br>See pages 3 and 66. | 1,8,14-15 |
| A | KR 10-2023-0084265 A (SAMSUNG ELECTRONICS CO., LTD.) 12 June 2023 (2023-06-12)<br>See paragraphs [0270]-[0278]; and figures 23-24. | 1-15 |
| A | KR 10-2022-0053613 A (VIVO MOBILE COMMUNICATION CO., LTD.) 29 April 2022 (2022-04-29)<br>See paragraphs [0035]-[0118]; and figure 2. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 February 2025** | **13 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/017678**

| C. DOCUMENTS CONSIDERED TO BE RELEVANT | | |
|---|---|---|
| Category* | Citation of document, with indication, where appropriate, of the relevant passages | Relevant to claim No. |
| A | US 2023-0328829 A1 (LENOVO (BEIJING) LIMITED) 12 October 2023 (2023-10-12) See paragraphs [0043]-[0058]; and figures 3-4. | 1-15 |

Form PCT/ISA/210 (second sheet) (July 2022)

**INTERNATIONAL SEARCH REPORT**
**Information on patent family members**

International application No.
**PCT/KR2024/017678**

| Patent document cited in search report | Publication date (day/month/year) | Patent family member(s) | Publication date (day/month/year) |
|---|---|---|---|
| KR 10-2023-0084265 A | 12 June 2023 | CN 116325871 A | 23 June 2023 |
| | | EP 4211917 A1 | 19 July 2023 |
| | | US 11943037 B2 | 26 March 2024 |
| | | US 2022-0109489 A1 | 07 April 2022 |
| | | US 2024-0235655 A1 | 11 July 2024 |
| | | WO 2022-075699 A1 | 14 April 2022 |
| KR 10-2022-0053613 A | 29 April 2022 | CN 111836279 A | 27 October 2020 |
| | | CN 111836279 B | 15 July 2022 |
| | | EP 4021059 A1 | 29 June 2022 |
| | | JP 2022-545895 A | 01 November 2022 |
| | | JP 7335422 B2 | 29 August 2023 |
| | | US 2022-0173789 A1 | 02 June 2022 |
| | | WO 2021-036943 A1 | 04 March 2021 |
| US 2023-0328829 A1 | 12 October 2023 | CN 116158105 A | 23 May 2023 |
| | | EP 4201133 A1 | 28 June 2023 |
| | | EP 4201133 A4 | 14 August 2024 |
| | | JP 2023-538692 A | 08 September 2023 |
| | | JP 7587687 B2 | 20 November 2024 |
| | | WO 2022-040870 A1 | 03 March 2022 |

Form PCT/ISA/210 (patent family annex) (July 2022)